# EUROPÄISCHE PATENTSCHRIFT

(11) **EP 3 318 335 B1**
(45) Veröffentlichungstag und Bekanntmachung des Hinweises auf die Patenterteilung: **29.11.2023**
(21) Anmeldenummer: 17001781.8
(22) Anmeldetag: 27.10.2017
(51) Int. Cl.: B05B 15/40, F16G 13/06

(54) **ROLLENKETTEN FÜR FAHRRÄDER**
ROLLER CHAIN FOR BICYCLES
CHAÎNES À ROULEAU POUR CYCLE

(30) Priorität: 03.11.2016 DE 102016013112; 16.10.2017 DE 102017009632
(43) Veröffentlichungstag der Anmeldung: 09.05.2018
(73) Patentinhaber: SRAM Deutschland GmbH, 97424 Schweinfurt (DE)
(72) Erfinder: da Silva Ribeiro, Bruno Miguel Ferreira, 3700-454 Aveiro (PT); dos Santos, Pedro Miguel Nunes, 3040-087 Coimbra (PT); da Silva, Diogo Daniel Soares, 3030-393 Coimbra (PT); Reinbold, Matthias, 97070 Würzburg (DE); Braedt, Henrik, 97456 Dittelbrunn/OT Hambach (DE); Collen, John, San Luis Obispo, CA 93401 (US)

(56) Entgegenhaltungen:
- EP-A2- 1 574 746
- EP-A2- 1 816 372
- DE-A1- 19 705 018
- DE-C- 93 477
- GB-A- 2 000 846
- JP-B1- 5 975 139
- ? Iwis: "Chain engineering Design and construction Examples of calculation", IWIS Website, 30. November 2006 (2006-11-30), Seiten 1-86, XP055282134, M?nchen Gefunden im Internet: URL:http://www.iwis.de/uploads/tx_sbdownlo ader/KettenHandbuch_E.pdf [gefunden am 2016-06-20]
- "JIS D 9417:2004 Bicycles-Chains (English Version)", JIS JAPANESE INDUSTRIAL STANDARD, JAPANESE STANDARDS ASSOCIATION, vol. D 9417, 1 September 2004 (2004-09-01) , XP009520190,

## Beschreibung

Die vorliegende Erfindung betrifft eine in Bezug auf die Längsachse asymmetrisch ausgebildete Rollenkette für Fahrräder.

Rollenketten als Antriebsketten für Fahrräder mit Kettenschaltung aus dem Stand der Technik setzen sich aus zueinander schwenkbar angeordneten Kettengliedern zusammen, mit deren Hilfe ein geschlossener Kettenring zur Antriebskraftübertragung ausgebildet wird. Ein Kettenglied besteht vor allem aus einem Paar von Innenlaschen oder Außenlaschen. Die Laschen verfügen jeweils über zwei Endbereiche mit runder Außenkontur, die ein Verbindungsbereich mit meistens taillierter Außenkontur verbindet. In den Endbereichen sind Lochungen konzentrisch zur Außenkontur vorgesehen.

Alternierend angeordnete Innenlaschen- und Außenlaschen-Kettenglieder sind an den Kettengelenken mittels Kettenbolzen drehbar miteinander verbunden. Die Lochungen befinden sich konzentrisch zu den Außenkonturen der runden Endbereiche der Laschen. Die Kettenbolzen sind in den Lochungen in den Außenlaschen eingepresst, während zwischen den Lochungen in den Innenlaschen und den Kettenbolzen jeweils ein Spiel vorhanden ist, um die Drehbeweglichkeit zu gewährleisten.

Es besteht das Bestreben, die Abstände zwischen den Laschen möglichst groß in Richtung senkrecht zur Innenfläche der Laschen zu gestalten. An den enger zusammenstehenden Innenlaschen dienen Fang-Fasen dazu, einen Einlauftrichter für die in den Laschenzwischenraum eintretenden Zähne des Kettenrades zu schaffen.

Bei der Weiterentwicklung von Kettenschaltsystemen für Fahrräder, die aus einem vorderen Kettenrad, einer Rollenkette, einem hinterem Mehrfachritzel und zugehörigen Umlege-Einrichtungen bestehen, hat sich die Anzahl der Ritzel am Mehrfachritzel schrittweise immer weiter erhöht. Damit einhergegangen sind Veränderungen der Abmessungen von Ritzeln, Kettenlaschen, Kettenbolzen und Kettenrollen, vor allem der Abmessungen in der Richtung parallel zur Längsachse der Kettenbolzen. Damit wird die Kette an die in immer geringerem axialem Abstand zueinander an der Hinterradnabe platzierten hinteren Kettenräder (Ritzel) angepasst. Dabei ist klar, dass über die Außenseite der Kettenlaschen vorstehende Bestandteile der Kettenbolzen auch hinderlich sind, weil sie ungewollt und störend in Kontakt mit Bestandteilen des benachbarten Ritzels geraten können.

Eine Reduzierung der Abmessungen der Bestandteile der Kette im Zuge der Weiterentwicklung führt zu dem Problem einer Erhöhung der Belastungen für die Kettenbestandteile. Auch ergeben sich geänderte Anforderungen für die Herstellung der Kettenlaschen.

Zum Lösen des Problems erhöhter Belastungen nutzt die Erfindung neben den Vorteilen asymmetrischer Kettenlaschen die Beibehaltung der belasteten Querschnitte aus. Das heißt, dass das durch eine Reduzierung der Abmessung in einer Richtung eintretende Ansteigen von Belastungen durch die Erhöhung der Abmessungen in anderen Richtungen kompensiert wird. Bei der Asymmetrie geht es um eine Asymmetrie in Bezug auf die Längsachse beziehungsweise Längsebene durch die zwei geometrischen Achsen der beiden Kettenbolzen an jeweils einem Kettenglied. Neben dem Aspekt der Reduzierung von Belastungen ergeben sich bei derart asymmetrischen Kettenlaschen weitere Effekte, wie eine Verbesserung der Führung der Kette beim Eingriff auf dem vorderen beziehungsweise hinteren Kettenrad.

Die genannte Asymmetrie wurde bei Rollenketten für Fahrräder schon ausgenutzt. In der erfinderischen Rollenkette kommen noch weitere Merkmale bezüglich der Außenkontur der Kettenlaschen hinzu, und es werden weitere Effekte angestrebt, wie eine verbesserte Führung der Kette auf den Kettenrädern in Einklang mit einem guten Verhalten der Kette bei der Passage von Zähnen am Kettenrad beim Schalten auf das benachbarte Kettenrad.

Insgesamt wird bei Ketten für Fahrräder eigentlich angestrebt, die Kette so zu gestalten, dass sie in jeder denkbaren Orientierung auf die Kettenräder aufgelegt werden können. Das führt zu einer Symmetrie bezüglich eines Punktes. Darum geht es bei dem hier vorliegenden erfinderischen Konzept aber nicht.

Ketten von einer Achssymmetrie in Hinsicht sowohl auf die Längsrichtung, als auch auf die Querrichtung abweichende Gestaltungen sind hinlänglich bekannt.

So bringt zum Beispiel eine Drehung des Kettenstranges um seine Längsachse um 180 Grad, mit einer Vertauschung der beiden Längsreihen von abwechselnden Innen- und Außenlaschen, dann keine Veränderung, wenn bei gleichbleibender Betrachtungsrichtung von oben auf den am Fahrrad montierten Zugtrum der Kette asymmetrisch angeordnete Formelemente links vorn, an einer dem Betrachter zugewandten Position einerseits und andererseits rechts vorn, an einer vom Betrachter abgewandten Position vorhanden sind.

Ein anderer Fall ist eine Drehung des Kettenstranges um eine Achse senkrecht zur Ebene durch die geometrischen Achsen der Kettenbolzen um 180 Grad, die auch mit einem Tausch der beiden Längsreihen von abwechselnden Innen- und Außenlaschen verbunden ist. Dann stellt sich keine Veränderung ein, wenn bei gleichbleibender Betrachtungsrichtung von oben auf den am Fahrrad montierten Zugtrum der Kette asymmetrisch angeordnete Formelemente sowohl links vorn, als auch rechts hinten vorhanden sind.

Die aus den beiden Drehungen in Kombination resultierenden Bedingungen müssen erfüllt sein, soll die Kette in irgendeiner Orientierung an den Kettenrädern am Fahrrad montierbar sein, ohne dass Veränderungen eintreten. Davon wird zum Beispiel dann abgewichen, wenn bei gleichbleibender Betrachtungsrichtung von oben auf den am Fahrrad montierten Zugtrum der Kette links sichtbaren Kettenlaschen für das Zusammenwirken mit den hinteren Kettenrädern (Ritzeln) in Hinsicht auf ihre geometrische Gestaltung für einen optimalen Schaltvorgang angepasst werden sollen, während die rechts sichtbaren Kettenlaschen für das Zusammenwirken mit den vorderen Kettenrädern an den Tretkurbeln für einen optimalen Schaltvorgang angepasst werden. Sind die geometrischen Unterschiede zwischen den linken und rechten Kettenlaschen nur gering und nur schwer erkennbar, dann kann es zu einer fehlerhaften Montage der Kette auf dem Fahrrad kommen und die mit der unterschiedlichen Gestaltung dieser Reihen von Laschen verbundenen Vorteile verkehren sich ins Gegenteil.

Die Rollenkette an Fahrrädern wirkt mit den Zähnen an Kettenrädern zusammen. Bei diesen Kettenrädern handelt es sich um vordere Kettenräder an der Tretkurbel und um hintere Ritzel am Hinterrad des Fahrrades. Die Rollenkette ist üblicherweise durch Verbinden der beiden Enden miteinander zu einem Kettenring geformt, der über eine Kettenring-Innenseite und eine Kettenring-Außenseite verfügt, und der sich im Wesentlichen entlang einer Mittelebene erstreckt. Infolge der sehr begrenzten Beweglichkeit der Kettenglieder senkrecht relativ zur Mittelebene wird beim Verbinden der Enden des ursprünglichen Kettenstücks festgelegt, was zur Kettenring-Innenseite und was zur Kettenring-Außenseite wird. Nur die Innenseite des Kettenrings wirkt mit den Zähnen an den genannten Kettenrädern zusammen. Die oberen Kettenführungsrollen an hinteren Kettenschaltwerken allein wirken mit der Außenseite des Kettenringes zusammen.

Damit die Verhältnisse sowohl beim Eingreifen der Zähne in ein Kettenrad, als auch beim Umlegen von einem zum benachbarten Kettenrad beibehalten werden, wird bei den meisten Ausführungsbeispielen der erfindungsgemäßen Kette die äußere Kontur der zur Innenseite des Kettenringes weisenden Laschen von üblichen Ketten übernommen.

Bei der erfindungsgemäßen asymmetrischen Gestaltung der Kette werden einige der genannten Nachteile vermieden. Für den Nutzer der Kette wird beim Montieren der Kette auf dem Fahrrad durch gut sichtbare Unterschiede an den Kettenlaschen klar, dass eine Kettenseite einer Position innen am Kettenring und die entgegengesetzte Seite der Kette einer Position außen am Kettenring entsprechen muss. Damit wird praktikabel, die erfindungsgemäße Kette als asymmetrische Kette gut zu handhaben.

Das heißt, dass für den Nutzer anhand des Erscheinungsbildes der erfindungsgemäßen Kette ihre zwei verschiedenen Seiten gut sichtbar und unterscheidbar sind. Es ist lediglich darauf zu achten, dass die als Innenseite eines Kettenringes vorgesehene Seite der Kette auch an der Innenseite des Kettenringes angeordnet ist. Das ist vom Nutzer auch deshalb schon leicht einzuhalten, weil die deutlich unterschiedlich gestaltete Außenkontur der Kettenlaschen erschwert oder gänzlich unmöglich macht, die Kettenglieder mit den nicht für den Eingriff vorgesehenen Kettenradzähnen in Eingriff zu bringen.

Das heißt dass bei der Anwendung der erfindungsgemäßen Kette Fehlmontagen weitestgehend ausgeschlossen werden und diese asymmetrische Kette tauglich für den praktischen Einsatz wird.

Der Ansatz der asymmetrischen Kettenlaschen ist im Einklang mit der belastungsgerechten Gestaltung von konventionellen Rollenketten für Fahrräder und geht von diesen aus.

Die Innenlaschen und die Außenlaschen konventioneller Ketten sind aus Blech als Rohmaterial gestanzt. Sie verfügen jeweils über ein Paar von Endbereichen und einen Verbindungsbereich, der das Paar von Endbereichen verbindet. Die Endbereiche sind in der Richtung der Ebene des Rohmaterials größer als in den Verbindungsbereichen. Das führt zu ausgeglichenen Belastungsverhältnissen bei der vorliegenden Bemessung.

Die hauptsächliche Belastung der Kettenlaschen entsteht durch die Kettenzugkraft in Längsrichtung der Laschen. Zusätzlich kommen bei den Außenlaschen noch Ringkräfte hinzu, die durch die in den Lochungen eingepressten Kettenbolzen entstehen. Bei Innenlaschen sind außerdem noch Torsionskräfte um die Längsrichtung des Kettenstranges von Bedeutung, die vor allem dann entstehen, wenn die Kette zwischen den Kettenrädern beim Schaltvorgang umgelegt wird und die Kettenzugskraft nicht reduziert ist, d. h. wenn der Fahrradfahrer während des Umschaltvorganges weiter mit großer Kraft pedaliert.

So hat sich eine in Bezug auf die in den Laschen auftretende Spannung vorteilhafte Gestaltung der Laschen herausgestellt, bei der der Abstand der Außenkontur der Laschen von der Mittelebene durch die geometrischen Achsen der Kettenbolzen ebenso groß ist, wie die radiale Abmessung der Ringe um die Lochung der Endbereiche. Ausgehend von diesem Konstruktionsprinzip wird bei der erfindungsgemäßen Gestaltung der Kette die Abmessung des Verbindungsbereiches, der Abstand zwischen der Mittelebene und der Außenkontur der Kettenlaschen an der Position des Kettenring-Innenseite beibehalten, d. h. nicht reduziert. Das hat den Vorteil, dass die für den Eingriff zwischen Kettenlaschen und Kettenrad-Zähnen vorhandenen geometrischen Verhältnisse beibehalten bleiben. Das betrifft sowohl die Eingriffsverhältnisse beim Schaltvorgang, also beim Umlegen der Kette von einem Kettenrad zum benachbarten, als auch beim normalen Antriebsfall ohne Umschaltvorgang.

Die Kontur der Kettenlaschen der erfindungsgemäßen Kette an der Kettenring-Außenseite ist so gewählt, dass der Abstand zwischen der Längsebene durch die geometrische Achse der Kettenbolzen und der Kontur deutlich größer ist, als bei konventionellen Ketten. Ein spürbarer Effekt tritt schon ein, wenn dieser Abstand um den halben Radius der Lochung in den Laschen erhöht wird.

Erfindungsgemäß ist die Konturlinie als Tangente an die Außenrundungen der beiden Endbereiche der Lasche gewählt. Davon sind abweichende Konturlinien möglich, etwa als Kreisbogen an den Außenrundungen der beiden Endbereiche.

Ketteninnenlaschen mit einer gegenüber der Längsebene beziehungsweise Längsachse asymmetrischen Form der Außenkontur sind an sich bekannt, zum Beispiel aus den Patentdokumenten GB 1595091; US 4596539, FR 812827, EP 0236184, DE 2829424. Bei derartigen Lösungen wird angestrebt, Platz zu schaffen für die Passage an einem Zahn vorbei beim Schaltvorgang. Dazu wird die Außenkontur von Kettenlaschen an der an der Kettenring-Innenseite vorhandenen Laschenkontur gegenüber konventionellen Ketten weit in Richtung der Längsachse der Laschen angenähert. Dadurch erhöhen sich die Belastungen der Kette beträchtlich, denn es treten nun in der Kettenlasche durch die Kettenzugkraft hervorgerufene große Biegemomente auf, die sich an der Laschenkontur an der Kettenring-Innenseite als zusätzliche Zugspannungen niederschlagen. Diese addieren sich zu den in den Laschen ohnehin schon zu verkraftenden Zugspannungen. In den genannten Dokumenten ist auf diesen Umstand und auf die notwendige Kompensation von zusätzlichen Zugspannungen nichts gesagt. Außerdem verhalten sich die Ketten in den genannten Dokumenten anders beim Umschaltvorgang, denn die veränderte Laschenkontur an der Kettenring-Innenseite ist maßgeblich am Prozess des Umlegens der Kette zum benachbarten Kettenrad beteiligt. Dort kommt die Kette in Kontakt mit Elementen in den Schaltgassen an den Kettenrädern.

In der US 7712298 ist ein Ketten-Verschlussglied gezeigt, dass letztendlich im montierten Zustand ein Bestandteil eines Kettenringes wird. Es nimmt dann den Platz eines Außenlaschen-Kettengliedes ein und verfügt ebenso wie dieses über Laschen.

Der Unterschied zu einem Außenlaschen-Kettenglied besteht bei dem gezeigten Verschlußglied darin, dass die Kettenbolzen nicht an ihrem Ende in Lochungen in den Laschen eingepresst sind. Stattdessen sind im Wesentlichen in der Längsrichtung der Laschen ausgerichtete Langlöcher für die formschlüssige Aufnahme der Enden der Verschlußglied-Bolzen vorgesehen. Entlang von einem Langloch wird bei der Montage des Verschlussgliedes eine Engstelle an einem Bolzenende bewegt, bis diese Engstelle am Ende des Langloches lösbar einrastet. Die Außenkontur der Lasche des Verschlußgliedes orientiert sich an der Form des Langlochs, wobei die für die Innenseite des Kettenringes vorgesehene Seite des Verschlußgliedes eine Außenkontur aufweist, die der Außenkontur einer konventionellen Kettenlasche entspricht. Damit wird vermieden, dass das Verschlußglied sich im Zusammenspiel mit den Zähnen der Kettenräder anders verhält, als ein Außenlaschen-Kettenglied.

Ein erster Aspekt des erfindungsgemäßen Konzeptes besteht in einer Beibehaltung beziehungsweise Vergrößerung der Querschnittfläche der Laschen im Verbindungsbereich. Das betrifft zumindest die Innenlaschen, bei denen es auf eine möglichst große lichte Weite zwischen dem Verbindungsbereich vom Paar dieser Innenlaschen ankommt, um günstige Verhältnisse für das Eingreifen der Zähne an den Kettenrädern zu erreichen, und gegebenenfalls auch die Außenlaschen. Die auffälligste Veränderung gegenüber üblichen Ketten besteht darin, dass der ursprünglich taillierte Verbindungsbereich der Laschen in Richtung der Erstreckungsebene der Lasche vergrößert wird.

Damit kann bei einer Reduzierung der Materialdicke der Laschen deren Belastbarkeit erhalten werden. Die Reduzierung der Materialdicke kann für eine Anpassung der Kette an die Gegebenheiten von hinteren Mehrfachkettenradanordnungen mit einer immer größer werdenden Anzahl der Kettenräder genutzt werden.

Wird die übliche Materialdicke beibehalten, dann kann die Belastbarkeit der Kette erhöht werden, was zum Beispiel bei Elektroantrieben für Fahrräder wünschenswert ist, weil sich die Belastungen resultierend aus der Tretbewegung des Fahrers und dem Elektroantrieb summieren.

Würde die Materialdicke der Innenlaschen insgesamt reduziert, dann würde in der Richtung parallel zu den Kettenbolzenachsen Platz gewonnen, der an anderer Stelle genutzt werden könnte. Dieser Platz könnte für die Beibehaltung der axialen Länge der Kettenrolle bei einer noch schmaler werdenden Kette genutzt werden, die für eine immer größere Anzahl von hinteren Kettenrädern (Ritzeln) an einer Mehrfach-Ritzelanordnung am Hinterrad geeignet wäre.

Ketteninnenlaschen aus einem Material mit einer geringeren Materialdicke sind bekannt aus der GB 1595091, die aber keinen Hinweis darauf gibt, dass etwas gegen die infolge der geringeren Materialdicke reduzierte Festigkeit unternommen werden soll. Auch weisen die Innenlaschen in diesem Dokument keine Kragen auf, für die umzuformendes Material zur Verfügung stehen muss. Vielmehr werden in die Lochungen in den Innenlaschen Buchsen eingefügt, auf denen die Kettenrollen gelagert sind.

Die Kragen an der zur gegenüberliegenden Innenlasche weisenden Seite der Innenlaschen werden durch Umformen des ursprünglich aus einem flachen, aus einem Bandmaterial ausgestanzten Rohlings geformt. Es versteht sich von selbst, dass für diesen Umformprozess mit Ähnlichkeiten zu einem Tiefziehvorgang auch entsprechendes Material vorhanden sein muss, aus dem dann gewissermaßen der rohrförmige Kragen aus dem flachen Rohling "herauswächst".

Für diesen Umformvorgang sind die Voraussetzungen umso besser, je größer die Materialdicke des Rohlings ist, und je größer der Außendurchmesser des Endbereichs des Innenlaschen-Rohlings ist.

Bei einer Innenlasche kann die Materialdicke in Verbindungsbereich und an den Endbereichen ebenso wie die Materialdicke des aus einem Bandmaterial ausgestanzten Rohlings gewählt werden. Die Materialdicke des Rohlings kann nicht beliebig reduziert werden, um eine in einer Richtung parallel zu den Kettenbolzen schmale Kette zu erhalten. Einer Reduzierung der Materialdicke des verwendeten Bandmaterials sind Grenzen durch die notwendige Belastbarkeit der Kettenlasche und durch die genannten Herstellbedingungen für die Kragen gesetzt.

Als Alternative kann die Innenseite der Innenlasche im Verbindungsbereich mit einer Aussparung versehen werden, was sich wie eine Reduzierung der Materialdicke in diesem Bereich auswirkt. Dadurch wird der Abstand in Richtung parallel zu den Kettenbolzen zwischen den Verbindungsbereichen und damit der Laschenzwischenraum größer. Ist zusätzlich zur Aussparung noch ein Innenlaschenüberstand vorhanden, dann ist der Abstand zwischen den Endbereichen der Innenlasche geringer, als der Abstand zwischen dem Verbindungsbereich der Innenlasche. Eventuell ist dann ein ordnungsgemäßer Eingriff der Zahnspitze zwischen den über die Kettenrolle radial vorstehenden Innenlaschenenden nicht mehr möglich.

Günstig bei einer derartigen Innenlasche fällt ins Gewicht, dass sich die Kragen an der Innenseite der Innenlasche infolge der großen Materialdicke günstig herstellen lassen.

Als Möglichkeit zum Umgehen dieses Problems kommt in Betracht, Fasen an der Außenkontur der Innenlaschen im Bereich des Innenlaschenüberstandes vorzusehen oder den Innenlaschenüberstand ganz entfallen zu lassen. Darauf wird später noch eingegangen.

Es ist erkannt worden, dass generell ein Wechselverhältnis bzw. ein Widerspruch besteht zwischen den verschiedenen Effekten von über die Kettenrolle in radialer Richtung überstehenden Innenlaschen (Innenlaschenüberstand).

Im Antriebsfall mit dem Zusammenwirken der Rollenkette mit dem Kettenrad liegt eine ordnungsgemäße Funktion der Kette vor, wenn die Folge von nacheinander in die Laschenzwischenräume eintretenden Zahnspitzen immer wieder die Kettenglieder so ausrichten, dass sie mit der Mittelebene des Kettenrades fluchten. Das ist vor allem bei einem Kettenschräglauf, d. h. bei einer schräg auf das Kettenrad auflaufenden Kette nicht unproblematisch.

Im Fall des Gangumschaltens von einem kleineren zu einem größeren Kettenrad soll die Kette nach der Verschiebung der Kettenglieder in einer Richtung parallel zu den Kettenbolzen hin zum größeren Kettenrad infolge des Einwirkens einer Kettenführungseinrichtung von einem vorderen Kettenwerfer oder von einem hinteren Schaltwerk letztendlich auch eine erste Zahnspitze am größeren Kettenrad in die Laschenzwischenräume eintreten.

Im Fall des Gangumschaltens von einem größeren zu einem kleineren Kettenrad soll die Kette hingegen nach der Verschiebung der Kettenglieder in einer Richtung parallel zu den Kettenbolzen hin zum kleineren Kettenrad infolge des Einwirkens einer Kettenführungseinrichtung letztendlich mit beiden Laschen eines Laschenpaares einen Kettenradzahn komplett auf der zum kleineren Kettenrad weisenden Seite passieren. Bei diesem Vorgang gibt es noch einen Zwischenschritt, in dem zunächst erst eine Verschiebung der Kette in einer Richtung parallel zu den Kettenbolzen relativ zum Kettenrad stattfindet, aber immer noch ein Eintreten von mindestens einem Zahn in den Laschenzwischenraum stattfindet.

Am Beginn des Eingreifens eines Zahnes an einem Kettenrad entscheidet sich, ob die Spitze des Zahnes wirklich dort eintritt, wo es gewollt ist.

Wird die Kette im Antriebsfall und beim Schalten zum größeren Kettenrad trotz Schräglauf wieder in die Ebene des Kettenrades gebracht, oder passieren im Fall des Schaltens auf das kleinere Kettenrad beide Laschen des Laschenpaares die Zahnspitze auf einer Seite, dann liegt eine ordnungsgemäße Funktion vor.

Verlaufen die Eingriffsvorgänge anders, dann kommt es zu nicht beabsichtigten Fehlfunktionen beim Schalten, oder die Kette springt sogar ganz vom Kettenrad ab, was eventuell erst nach Zwischenschritten passiert. Es findet beim Eintauchen von Zahnspitzen in den Laschenzwischenraum gewissermaßen eine "Weichenstellung" statt, die exakte oder fehlerhafte Resultate bringt.

Bezüglich der Laschenzwischenräume gibt es Unterschiede zwischen einem Innenlaschenkettenglied und einem Außenlaschenkettenglied.

In einem Innenlaschenglied sind es die Innenlaschen und die Kettenrollen, die den Raum definieren, in den die Zähne der Kettenräder eintreten und eingreifen können. Dabei kann es schon zu Beginn des Eingriffsvorgangs zum Kontakt zwischen Zahn und Ketteninnenlasche kommen. Fasen an der Innenseite der Lasche vergrößern den Platz, der für den Zahn zur Verfügung steht und erleichtern das Eingreifen.

Der Laschenzwischenraum wird bei einem Außenlaschenglied definiert durch die Kettenrollen, die Innenseiten der Außenlaschen sowie den über die Kettenrollen überstehenden Bestandteile der Innenlaschen, wenn ein Innenlaschenüberstand vorhanden ist. Dieser Effekt verstärkt sich im Antriebsfall mit wachsendem Kettenschräglauf, d. h. je mehr das hintere Kettenrad (Ritzel) gegenüber der Ebene des vorderen Kettenrades in einer Richtung senkrecht zu dieser Ebene versetzt ist.

Ein Innenlaschenüberstand ist aber nicht zwangsläufig. Er ist nicht bei allen möglichen Ausführungsformen von Rollenketten vorhanden.

Bei einem Umschaltvorgang kann die äußere Peripherie der Innenlasche störend mit der Flanke des Zahnes, die sich im Zahnzwischenraum befindet, in Kontakt kommen, was die Kettenlasche in eine nicht gewünschte Position bringt.

Ein Innenlaschenüberstand tritt negativ in Erscheinung, wenn zum Beispiel von einem größeren zu einem kleineren hinteren Ritzel umgeschaltet wird. Dann wird zu Beginn des Umschaltvorganges die Kette in einer Richtung parallel zu den Kettenbolzen relativ zum Kettenradzahn verlagert und die Spitze des Ritzelzahnes muss trotzdem noch in den Raum zwischen den Außenlaschen eingreifen.

Dann kann im Fall des Schaltens vom größeren zum benachbarten kleineren hinteren Kettenrad die Kontur einer Innenlasche am Laschenende in Kontakt mit der Flanke des Zahnes geraten, wenn ein Längsüberstand vorhanden ist. Somit wird ein sauberer Umschaltprozess gestört. Es wirkt sich besonders aus, weil es sich bei der beteiligten Zahnflanke um die Lastflanke am Zahn handelt, die auch beim Übertragen der Antriebskraft beteiligt ist, und deshalb nicht nach Belieben konstruktiv geändert werden kann.

Die an einem vorderen Kettenwerfer und an einem hinteren Schaltwerk vorhandenen Kettenführungseinrichtungen wirken einem Abspringen der Kette entgegen. Ein vorderer Kettenwerfer, und dementsprechend eine vordere Kettenführungseinrichtung, sind bei denjenigen Rollenkettenantrieben entfallen, die in jüngster Vergangenheit erfolgreich bei Fahrrädern eingeführt worden sind. Möglich wurde dieser Schritt mit Kettenrädern, die verdickte Zähne aufweisen, die den Laschenzwischenraum an Außenlaschengliedern gut ausfüllen. Damit wird auch an Außenlaschenkettengliedern eine optimierte Führung der Kette auf dem Kettenrad erreicht, die bei konventionellen Kettenantrieben lediglich zwischen Kettenradzahn und Innenlaschenglied gegeben ist.

Ein schlechtes Kettenführen kann als Vorstufe zum Kettenabspringen angesehen werden. Damit trägt eine gute Kettenführung im Antriebsfall dazu bei, dass es nicht zum Kettenabspringen kommt. Zusätzlich helfen Kettenführungseinrichtungen am vorderen Kettenwerfer oder am hinteren Schaltwerk, eine außer Eingriff am Kettenrad gelangte Kette wieder in den Eingriff zurückgleiten zu lassen.

Die Wirkung eines Innenlaschenüberstandes ist unterschiedlich, je nachdem, an welcher Position der Außenkontur des Endbereichs der Innenlasche der Innenlaschenüberstand vorhanden ist.

Bei Innenlaschen, die in der Nähe der Längsachse der Kette über einen Innenlaschenüberstand (Längsüberstand) verfügen, begrenzt dieser Längsüberstand bei der Annäherung der betreffenden Kettenrolle an die Zahnflanke, wie weit sich die Kette in einer Richtung parallel zur geometrischen Achse der Kettenbolzen bewegen kann. Die Annäherung erfolgt schon relativ zeitig während des Einschwenkens des Kettengliedes in Richtung der Zahnlücke am Kettenrad.

Ein Innenlaschenüberstand kann vorhanden sein im Bereich der Außenkontur der Innenlaschen, der sich etwa parallel zur Längsachse und somit in Querrichtung der Kette befindet (Querüberstand). Die Abschnitte mit einem solchen Querüberstand nähern sich erst am Ende des Einschwenkens des Kettengliedes und somit später an die Zahnkontur in der Zahnlücke an.

Somit hat ein Querüberstand zumindest eine Wirkung in Hinsicht auf die Führung der Kette beim Einschwenken am Ende der Einschwenkbewegung des Kettengliedes und auf die Fixierung der am Kettenrad in Eingriff befindlichen Kettenglieder. Ein Querüberstand hat wenig Auswirkung auf den Vorgang des Umlegens der Kette zum Zweck des Gangumschaltens.

Ein Längsüberstand hat zusätzlich noch eine Auswirkung auf den maximal möglichen Kettenschräglauf, bei dem die Kette gerade noch sauber mit den Zähnen am Kettenrad in Eingriff gelangt.

Ein Kettenschräglauf tritt an Rollenkettenantrieben für Fahrräder mit mehreren hinteren Kettenrädern (Ritzeln) zwangsläufig infolge der nicht fluchtenden vorderen und hinteren Kettenräder auf, die im Antriebsfall an der Kraftübertragung durch die Kette beteiligt sind. Der Kettenschräglauf ist umso größer, je weiter das hintere Kettenrad von der Ebene des vorderen Kettenrades entfernt ist. Die Fälle von kleinstem vorderen Kettenrad in Kombination mit dem größten hinteren Kettenrad sowie von größtem vorderen Kettenrad in Kombination mit dem kleinsten hinteren Kettenrad sind am kritischsten und werden deshalb von den Herstellern der Komponenten für Fahrradantriebe auch meist nicht empfohlen. Es wird den Fahrradnutzern geraten, diese Kombinationen im praktischen Betrieb nicht zu nutzen.

Ist kein Längsüberstand vorhanden, dann gibt es keine störenden Einflüsse auf den Umschaltprozess vom größeren zum kleineren hinteren Kettenrad (Ritzel) oder vorderen Kettenrad.

Somit kann eingeschätzt werden, dass ein Innenlaschenüberstand einen Beitrag zur Führung der Kette auf den Kettenrädern leistet. Andererseits ist der Innenlaschenüberstand je nach konkretem Anwendungsfall mehr oder weniger störend, wenn es auf gutes Kettenumlegen zum Zweck des Gangumschaltens ankommt.

Das erfindungsgemäße Grundkonzept von asymmetrischen Kettenlaschen wird mit weiteren Merkmalen an der Rollenkette für spezielle Anwendungsfälle kombiniert, die sich hinsichtlich der Anforderungen unterscheiden.

Ein spezieller Anwendungsfall liegt an einem Rennrad vor, wo nach wie vor geschätzt wird, durch das einmalige Umschalten zum benachbarten vorderen Kettenrad einen großen Gangsprung umsetzen zu können.

Ein vollkommen weggelassener Längsüberstand, also ein Überstand der Innenlasche gegenüber der Kettenrolle in der Nähe der Längsachse der Innenlasche wird möglich, weil die Einrichtungen zum Umlegen der Kette zwischen verschiedenen Kettenrädern schon über gesonderte Kettenführungseinrichtungen verfügen. Damit verbessern sich die Schräglaufeigenschaften, denn der in den Laschenzwischenraum eintretende Zahn kollidiert nicht mit dem Längsüberstand.

Ein in jüngster Zeit entwickeltes, schon genanntes Antriebssystem vor allem für Mountainbikes kommt mit lediglich einem vorderen Kettenrad an der Tretkurbel aus. In diesem Fall ist keine Kettenführungseinrichtung eines vorderen Kettenwerfers vorhanden, da auf diesen Kettenwerfer vollständig verzichtet wird. Zur Führung der Kette durch die Zähne am vorderen Kettenrad werden diese Zähne alternierend in Umfangsrichtung als dicke und dünne Zähne ausgebildet. Der Innenlaschenüberstand wird dann zusätzlich zur Kettenführung genutzt.

Die Abschrägungen und Fasen am Innenlaschenüberstand an den Innenlaschen sind vorgesehen, damit die Zähne an den Kettenrädern und die Kette gut in Eingriff kommen. Sie gehen weit über das hinaus, was als Fase in einem Winkel von 45 Grad zum Brechen einer scharfen Kante an einem Massivteil oder an einem Blechteil wie einer Kettenlasche schon bekannt ist. Sie bilden trichterförmige "Passagen" an der Kette für den Ein- und Austritt der Zahnspitzen.

Diese "Passagen" werden sowohl beim Schaltvorgang mit dem Umlegen der Kette vom kleineren zum größeren Kettenrad und beim Umlegen der Kette vom größeren zum kleineren Kettenrad, als auch im Antriebsfall wirksam. Im Antriebfall spielt eine große Rolle, dass dem Schräglauf der Kette entgegengewirkt werden muss.

Der Innenlaschenüberstand wird in Längsüberstand und Querüberstand eingeteilt, wie schon erörtert.

Entsprechend der Weiterbildung der erfinderischen Kette werden Längsüberstand und Querüberstand in voneinander abweichenden Ausgestaltungen genutzt. Das hängt einerseits damit zusammen, dass sich Längs- und Querüberstand unterschiedlich auf den Verschleiß auswirken, andererseits kann unter bestimmten Bedingungen auf den Längsüberstand mit seiner Führungsfunktion verzichtet werden, oder der Längsüberstand wird reduziert.

An der gegenüber der Kettenrolle vorstehenden Innenlasche in der Nähe der Längsachse, also beim Längsüberstand, befindet sich bis zum letzten Arbeitsgang beim Stanzen und Umformen der Innenlasche ein schmaler Materialstreifen, an dem die in mehreren Arbeitsschritten aus einem Bandmaterial herausgearbeitete Innenlasche aufgehängt bleibt. Im letzten Arbeitsgang wird dieser schmale Streifen dann durchtrennt und die Innenlasche wird ein separates Teil. Es ist nicht möglich, an dieser Position den Innenlaschenüberstand mit einer Fase zu versehen, die in bestimmten Situationen notwendig ist, wie schon erörtert. Folglich tritt dieser Abschnitt des Innenlaschenüberstandes störend in Erscheinung.

In erfinderischer Weise wird dieses Problem dadurch gelöst, dass die Innenlasche ohne Längsüberstand aber mit Querüberstand versehen wird, wenn auf die Führungsfunktion des Längsüberstandes verzichtet werden kann. Das ist der Fall bei Ketten, die in Antriebssystemen mit ausreichenden anderen Führungselementen eingesetzt werden, wie zum Beispiel mit Kettenführungseinrichtungen sowohl an vorderen Kettenwerfem, als auch an hinteren Schaltwerken.

Beim Kontakt zwischen Zahn am Kettenrad und Fasenoberfläche kann Material partiell "verschmiert" werden, was zu einer Gratbildung und letztendlich zum Verklemmen des Kettengelenkes führen kann.

Diese Effekte gibt es beim Querüberstand nicht. Dort ist die Führungsfunktion gewünscht und kann auch genutzt werden. Dementsprechend ist am Querüberstand ein anderer Fasenwinkel wählbar.

Somit können die Fasen am Längsüberstand einerseits und am Querüberstand andererseits unterschiedliche Fasenwinkel, dem Winkel zwischen der Fase und der durch die Innenlaschen-Innenseite gebildeten Ebene, aufweisen. Bevorzugt ist der Fasenwinkel am Längsüberstand größer bemessen als der am Querüberstand. Insbesondere weist die Lasche einen Fasenwinkel von etwa 38 Grad am Längsüberstand und ein Fasenwinkel von etwa 51 Grad am Querüberstand auf.

Damit steht die über die Kettenrolle überstehende Innenseite der Innenlasche am Querüberstand bis zu einer großen radialen Höhe zur Führung zwischen Zahn am Kettenrad und Ketteninnenlasche zur Verfügung.

Die asymmetrische Außenkontur der Kettenlasche erlaubt eine besonders dünne Ausgestaltung der Kettenlaschen. Die Festigkeit der Kettenlasche bleibt trotz der geringen Materialdicke erhalten, weil der Querschnitt, obwohl er sich in axialer Richtung (Dicke) verringert, aufgrund der asymmetrischen Form der Laschen in Querrichtung erhöht wird und daher insgesamt etwa gleich bleibt. Eine besonders geringe Materialdicke der Kettenlaschen in einem Bereich von etwa 0,65 mm bis 0,75 mm wird angestrebt. Insbesondere die Innenlasche weist bevorzugt eine Materialdicke von 0,70 mm auf. Die Materialdicke der Innenlaschen kann in ihrem Verbindungsbereich durch eine Aussparung noch weiter reduziert werden. Hier trägt die Querschnittserhöhung aufgrund der asymmetrischen Form der Innenlasche im Verbindungsbereich besonders stark zur Festigkeit der Lasche bei. Durch diese Aussparung wird Platz für die eingreifenden Zähne der Ritzel geschaffen - der Laschenzwischenraum eines Laschenpaares wird vergrößert. Die Materialdicke im Verbindungsbereich der Lasche liegt dann in einem Bereich von 0,55 mm bis 0,65 mm. Besonders bevorzugt beträgt die Materialdicke im Bereich der Aussparung 0,60 mm. Selbstredend kann auch die'Außenlasche eine solche Aussparung im Verbindungsbereich aufweisen.

Bei einem Kettenring mit eindeutig festgelegter Innenseite, wie bei der erfindungsgemäßen asymmetrischen Kette, bewegen sich die Zähne immer nur von dieser Innenseite in den Zwischenraum zwischen dem Paar von Laschen in den Laschenzwischenraum hinein.

Das eröffnet die Möglichkeit, die Asymmetrie der Kette so weit zu treiben, dass die Außenseite des Kettenringes gar nicht mehr dazu geeignet ist, das Eintauchen der Zähne der Kettenräder von dieser Seite zu ermöglichen. Die Verbindungsabschnitte der Kettenlaschen sind an der Außenseite des Kettenringes so weit aufeinander zu gebogen, dass sich ein keilförmig verengter Laschenzwischenraum ergibt. Dieser Zwischenraum kann zwar noch die Zahnspitzen von Zähnen an den Kettenrädern aufnehmen, die Zähne können diesen Zwischenraum jedoch nur von der Innenseite des Kettenringes erreichen, und zwar nachdem sie von der Innenseite des Kettenringes in den Laschenzwischenraum eingeführt worden sind und die Längsebene der Kettenlaschen passiert haben.

Die Verbindungsabschnitte der Kettenlaschen müssen über entsprechend umgeformte Elemente verfügen, die in den Laschenzwischenraum hineinragen und diesen zur Laschenaußenkontur hin keilförmig verengen. Bei konventionellen Ketten sind vergleichbare Elemente zu einem Wechselwirken mit den Zähnen zwar schon hinlänglich bekannt, aber diese Elemente wurden bisher immer nur wirksam auf dem Weg der Zahnspitze von der Außenkontur der Kettenlasche bis zur Längsachse der Kettenlasche. Nunmehr gibt es eine Wechselwirkung mit der Zahnspitze, nachdem sie die Längsachse der Kettenlasche passiert hat und sich in den Raum jenseits der Längsachse bewegt.

Die deutliche Unterscheidung der Innenseite des Kettenrings von der Außenseite des Kettenrings eröffnet neue Möglichkeiten für die Führung der Kette auf den Zähnen des vorderen und des hinteren Kettenrades.

Für die Gestaltung von Rollenkettenantrieben für Fahrräder, die nur über ein einziges vorderes Kettenrad an der Tretkurbel verfügen und dementsprechend infolge des Fehlens eines vorderen Kettenwerfers mit einer zugehörigen Kettenführung auch diese vordere Kettenführung nicht aufweisen, wurden alternative Elemente in diesen Kettenantrieben eingeführt. So wurden die Zähne an den vorderen Kettenrädern verändert, damit optimierte Verhältnisse für das Zusammenwirken von der Rollenkette und den Zähnen an den Kettenrädern angestrebt werden konnten. Gab es vor dem Zähne mit einer einheitlichen Dicke in der Richtung parallel zur Drehachse des Kettenrades, so wurde Übergegangen auf Zähne mit einer in der Umfangsrichtung alternierenden Dicke, um eine Übereinstimmung mit den alternierend größeren und kleineren Zwischenräumen zwischen den Kettenlaschenpaaren zu erzielen.

Das hier vorliegende Konzept einer Kette mit deutlich zu unterscheidenden Innen- und Außenseiten des Kettenringes erlaubt nun, dass die Kettenaußenlaschen mit anderen als Kettenführungselementen wirkenden Abschnitten an Kettenrädern zum Zweck einer optimalen Kettenführung zusammenwirken. Zu diesem Zweck werden bis weiter nach innen am Kettenring reichende Elemente an den Außenlaschen vorgesehen, die mit Abschnitten am Kettenrad zusammenwirken, die über eine größere Abmessung parallel zur Drehrichtung des Kettenrades verfügen.

Damit ergibt sich insgesamt die Situation, dass radial weiter innen am Kettenrad vorhandene Kettenführungspartien mit den weiteren Außenlaschen und radial weiter außen am Kettenrad vorhandene Kettenführungspartien mit den engeren Innenlaschen zusammenwirken.

Es gibt keine widersprechenden Bedingungen, weil die in Hinsicht auf ihre radiale Position am Kettenrad unterschiedenen Kettenführungspartien selektiv mit den für sie vorgesehenen Partner in Wechselwirkung kommen. Die weiteren Kettenaußenlaschen reichen beim Eingriffsvorgang am Kettenrad bis weiter nach radial innen am Kettenrad, nachdem sie die weiter radial außen angeordneten Kettenführungspartien für die Innenlaschen passiert haben, ohne dass es zu einer Wechselwirkung mit diesen gekommen ist.

Als eine einfache Ausführungsform von weiter radial innen am Kettenrad vorzusehenden Kettenführungspartien für die Außenlaschen kann eine zur Drehachse des Kettenrades konzentrische ringförmige Wulst vorgesehen werden, die einfach herzustellen ist.

Schmale Ketten sind insbesondere für Mehrfach-Ritzelanordnungen mit einer erhöhten Anzahl von elf, zwölf, dreizehn oder mehr Ritzeln von Bedeutung. Aufgrund des geringen Bauraums in axialer Richtung müssen die Ritzel in sehr geringen Abständen zueinander positioniert werden. Der Strang von alternierend an einer Seite der Kette angeordneten Innen- und Außenlaschen muss so schmal bemessen sein, dass er in die Freiräume zwischen den Ritzeln passt, ohne mit dem nächstkleineren oder dem nächstgrößeren Ritzel zu kollidieren. Außerdem können insbesondere die größten beiden Ritzel in axialer Richtung unterschiedlich dick ausgebildete Zähne aufweisen, die sich positiv auf die Kettenführung auswirken. Die Verdickung der Zähne ist in vorteilhafter Weise auf der Seite der Ritzel ausgebildet, die dem benachbarten größeren Ritzel zugewandt ist. An der Seite der Ritzel, die dem benachbarten kleineren Ritzel zugewandt ist, sind die Zähne nicht verdickt, andernfalls käme es beim Eingriff der Kette an einem Ritzel zu einem Kontakt und damit zu einer störenden Geräuschentwicklung zwischen der Kette und den Zähnen am benachbarten größeren Ritzel. Dabei ist die Verdickung an den dicken Zähnen so groß bemessen, dass ein dicker Zahn in den Laschenzwischenraum eines Außenlaschengliedes passt, aber nicht in den kleineren Laschenzwischenraum eines Innenlaschengliedes. Bevorzugt weisen die Ritzel eine gerade Anzahl von Zähnen auf, wobei sich dicke und dünne Zähne entlang des Umfangs abwechseln. Die erfindungsgemäße Kette steht mit einer am Hinterrad eines Fahrrades angeordneten Mehrfach-Ritzelanordnung und mit einer vorderen Kettenblatt-Anordnung an einem Tretlager mit einem, zwei oder drei Kettenblättern in Eingriff. Bei Ausführungen mit nur einem Kettenblatt kann die Kettenführung am vorderen Kettenblatt ebenfalls durch den Einsatz von alternierenden dicken und dünnen Zähnen verbessert werden.

Die erfindungsgemäße Kette ist besonders schmal gebaut. Zum einen erlauben die asymmetrischen Laschen eine sehr geringe Laschendicke bei Beibehaltung der Festigkeit. Der Ausgleich des Materialquerschnitts im Verbindungsbereich der Laschen führt zu einer annähernd gleichbleibenden Zugfestigkeit der Laschen. Des Weiteren kann die Festigkeit der Laschen im Ringbereich bei reduzierter Laschendicke beibehalten werden, wenn auch die Durchmesser der Endbereiche vergrößert werden. Auch an den Endbereichen kann so der Materialquerschnitt einer dünneren Lasche ausgeglichen werden. Bei einem gleichbleibenden Durchmesser der Lochung und einem vergrößerten Durchmesser der Endbereiche vergrößert sich also auch der Ringabstand, was die Zugfestigkeit der Lasche weiter erhöht.

Zum anderen können zusätzlich besonders schmale Kettenrollen mit einem erhöhten Kettenrollendurchmesser zum Einsatz kommen, die ebenfalls dazu beitragen, die Gesamtbreite der Kette zu reduzieren. Der erhöhte Kettenrollendurchmesser trägt dazu bei, die Flächenpressung zwischen Kettenrolle und Lastflanke des Zahns zu reduzieren. Der erhöhte Kettenrollendurchmesser führt zu einer erhöhten Auflagefläche zwischen Kettenrolle und Lastflanke des Zahns und gleicht somit die reduzierte Kettenrollenbreite aus. Außerdem erlaubt ein erhöhter Kettenrollendurchmesser zusammen mit einem erhöhten Durchmesser der Endbereiche der Innenlaschen einen gleichbleibenden Querüberstand der Innenlasche über die Kettenrolle hinaus.

Die angesprochenen Maßnahmen zur Reduzierung der Kettengesamtbreite, (Ausgleich des Materialquerschnitts im Verbindungsbereich und/oder an den Endbereichen der Laschen - Zugfestigkeit, Ausgleich der Auflagefläche zwischen Kettenrolle und Zahn - Flächenpressung) können separat oder kombiniert angewendet werden. Eine besonders schmale, stabile und verschleißfeste Kette wird erzielt, wenn die Maßnahmen kombiniert werden.

Ein gestalterisches Konzept mit der Vergrößerung des Durchmessers der Kettenrolle in Kombination mit der Reduzierung der axialen Länge dieses Kettenbolzens in Zusammenhang mit der Erhöhung der Anzahl an einer Anordnung von einer immer größeren Anzahl von Ritzeln an einer Mehrfach-Ritzelanordnung ist in sich schlüssig. Der axiale Abstand zwischen den Ritzeln ist geringer. Damit wird beim Umlegen der Kette von einem Ritzel zum benachbarten Ritzel der Abknickwinkel der Kette geringer, und mit diesem verringerten Abknickwinkel wird auch die Notwendigkeit zu einer in Umfangsrichtung verlängerten Zahnlücke geringer. Es bleibt demzufolge noch genügend Raum für einen Zahn im Raum zwischen zwei in Kettenlängsrichtung benachbarten Kettenrollen.

Aus Funktionserfordemissen ist ein Längsüberstand und ein Querüberstand der Innenlasche gegenüber der Kettenrolle notwendig. Bei dem vergrößerten Durchmesser der Kettenrolle folgt daraus eine Vergrößerung des Durchmessers der Endbereiche der Innenlasche. Daraus ergibt sich eine ebenso große Vergrößerung des Durchmessers der Endbereiche der Außenlasche. Diese Vergrößerung des Durchmessers der Endbereiche der Außenlasche und der Innenlasche führt bei beibehaltenen Durchmesser-Abmessungen der Kragen zu einer Vergrößerung der radialen Abmessung der Ringbereiche. Das ist eine willkommene Maßnahme zur Beibehaltung der Festigkeit der Ringbereiche bei der vorgenommenen Reduzierung der Materialdicke der Laschen.

Andererseits ist wünschenswert, die Gesamtlänge der Laschen trotz Vergrößerung der radialen Abmessung der Ringbereiche nicht zu erhöhen. Die Beibehaltung der Gesamtlänge der Laschen ist insbesondere beim Wechsel der Kette von einem größeren auf ein kleineres Ritzel von Vorteil, denn andernfalls wird eine Passage eines Kettengliedes seitlich an einem Zahn dadurch verzögert und erschwert, weil eine vorstehende Außenlasche mit der Zahnflanke in einem Zahnzwischenraum kollidiert.

Die Gesamtlänge der Laschen kann beibehalten werden, weil die Querschnitte entlang der Längsebene nicht kritisch bezüglich bestehender Spannungen sind. Somit ist dort eine Reduzierung des Querschnittes infolge der Reduzierung der Materialdicke ohne Einbußen bezüglich der Sicherheit gegenüber einem Bruch möglich. Damit ergibt sich, dass der Abstand zwischen Außenperipherie der Kettenlaschen in Richtung der Längsebene geringer ist, als der zweite Abstand zwischen der Außenperipherie der Kettenlaschen in Richtung der Querebene oder in einer Richtung 45 Grad zwischen Längs- und Querebene.

Schließlich spielt eine beibehaltene Gesamtlänge der Kettenlaschen auch eine Rolle bei der Fertigung, das heißt beim Ausstanzen der Kettenlaschen aus einem Bandmaterial. Wird diese Gesamtlänge beibehalten, dann ergibt sich der günstige Aspekt, dass dieselbe Länge an Bandmaterial pro Kettenlasche verbraucht wird. Außerdem bleibt der Vorschub des Bandmaterials von einer Stanzoperation zur nächsten Stanzoperation gleich groß, was ein Vorteil ist.

Ein Kettenring entsteht durch das Verbinden der beiden Enden eines Kettenstücks miteinander durch geeignete Mittel, zum Beispiel durch ein Paar I-förmiger Kettenverbindungsglieder. Dieser Kettenring hat eine Innenseite und eine Außenseite. Infolge der Steifigkeit des Kettenstücks in Hinsicht auf Torsion um die Längsachse der Laschen sowie in Hinsicht auf Biegung gegenüber einer Ebene senkrecht zu den Kettenbolzen ist unmöglich, die Innenseite zur Außenseite umzuwandeln, und umgekehrt. Somit ist mit dem Entstehen des Kettenringes die Innen- und Außenseite des Kettenringes eindeutig festgelegt. Bei der erfindungsgemäßen Rollenkette ist es hilfreich, dass die als Innen- beziehungsweise als Außenseite des Kettenringes vorgesehenen Kettenseiten durch ihre asymmetrische Formgebung auch gut voneinander unterscheidbar sind.

Ein Aspekt der Erfindung ist die klare Unterscheidung einer Führungs-Seite der Kettenglieder, beziehungsweise Kettenlaschen an der Außenseite des Kettenrings einerseits und Eingriffs-Seite der Kettenglieder beziehungsweise Kettenlaschen an der Innenseite des Kettenrings.

Die Führungs-Seite der Kette ist für die Führung an den Führungszähnen der oberen Kettenführungsrolle an der Kettenführung eines hinteren Schaltwerks optimiert.

Die Eingriffs-Seite der Kette ist für den Eingriff an den vorderen und hinteren Kettenrädern (vordere Kettenringe beziehungsweise hinteren Ritzel) eines Fahrrades sowie für die Umschaltvorgänge zwischen diesen Kettenrädern gestaltet.

Somit weist lediglich die an der Innenseite des Kettenringes positionierte Eingriffs-Seite der Kette Fang- und Abweisefasen für das Zusammenwirken mit den Zähnen an den hinteren und vorderen Kettenrädern auf. Derartige Fang- und Fangfasen sind hinlänglich bekannt.

Bei der Optimierung der Eingriffs-Seite und der Führungs-Seite kommt es bei der erfindungsgemäßen Rollenkette zwangsläufig zu Abweichungen gegenüber einer vordem symmetrisch ausgebildeten Kette.

Eine aus Festigkeits-Gründen ohnehin schon asymmetrisch ausgebildete Kette kann auch noch zusätzlich bezüglich der Ausbildung als Eingriffs- und Führungs-Seite optimiert werden. Der Verbindungsbereich mit konkaver Außenperipherie bietet sich hierbei wegen der Anforderungen an die geforderten Eingriffs-Eigenschaften als Eingriffs-Seite an.

An der Führungs-Seite der Kette sind Abweise- und Fangfasen für das Zusammenwirken mit den Zähnen an den hinteren und vorderen Kettenrädern vollkommen entbehrlich. Es genügt, hier eine Anpassung der Kettenlasche für das Zusammenwirken mit der oberen Kettenführungsrolle des hinteren Schaltwerkes vorzusehen, wobei sicherzustellen ist, dass die Kettenführungsrolle in der Lage sein muss, die Kette in einer Richtung parallel zur Drehachse der Ritzel zu verlagern und zu führen, zum Zweck des Gangumschaltens. Es werden an der Führungs-Seite der Kettenlaschen Führungsfasen oder Führungsvorsprünge vorgesehen. In der US 4,741,725 sind schon Führungsvorsprünge gezeigt, die als umgeformte Partien an der Außenperipherie der Außenlasche bestehen. Es entstehen sowohl zwischen einem Paar von Außenlaschen, als auch zwischen einem Paar von Innenlaschen Laschenzwischenräume mit vergleichbar großer Weite für die Führungszähne an der Kettenführungsrolle eines hinteren Schaltwerkes.

In der US 4,741,725 weisen die den Ritzelzähnen gegenüber stehenden Partien der Kettenlaschen an der Außenperipherie Ausnehmungen auf, um beim Umlegen der Kette von einem Ritzel zum benachbarten Ritzel eine Passage der Ritzelzähne in einer Richtung parallel zur Ritzeldrehachse zu ermöglichen. Die dabei stattfindende Relativbewegung der Kettenlasche relativ zum Ritzelzahn weist gegenüber der hauptsächlich radialen Relativbewegung bei einem Eingreifen eines Zahnes in einen Zahnzwischenraum an einem Außenlaschenglied grundlegende Unterschiede auf.

Führungsfasen an der Führungs-Seite der Kette funktionieren grundsätzlich ähnlich wie Fangfasen an der Eingriffs-Seite der Kettenlaschen. Sie bilden eine Art "Einlauftrichter" für die Führungszähne an der Kettenführungsrolle, die in radialer Richtung kürzer sind als Zähne an Ritzeln.

Anders als bei der Eingriffs-Seite mit Eingriffs- und Abweisefasen sind Änderungen an der Führungs-Seite der Laschen möglich, soweit sie die Führungsfunktion nicht stören. Es können Änderungen der Außenkontur der Lasche zum Zweck der Erhöhung bzw. Beibehaltung der Festigkeit vorgenommen werden.

Weiterhin kann eine Einengung von Laschenzwischenräumen erfolgen, wie das in der US 4,741,725 mit der Einengung des Laschenzwischenraumes zwischen einem Paar von Außenlaschen schon ausgeführt worden ist.

Es bestehen noch weitere Unterschiede bezüglich den Anforderungen an Führungsfasen einerseits, im Vergleich zu Eingriffs- und Abweisefasen andererseits, aus denen sich unterschiedliche Gestaltungsmöglichkeiten ergeben.

Bei konventionellen Rollenketten für Fahrräder kann es zu einem Aufsprengen der Kette kommen, wenn beim Vorliegen einer großen Zugkraft in der Kette die Spitze eines Zahnes am Ritzel in einen Spalt zwischen Kettenrolle und Innenlasche oder zwischen Innenlasche und Außenlasche eindringt. Diese große Zugkraft liegt dann vor, wenn die Kettenglieder in den unter einer großen Antriebskraft stehenden Zugtrum der Kette einlaufen. Dann kommt es vor, dass die Außenlasche vom Kettenbolzen getrennt wird. Fasen an der Kontaktstelle zwischen Innen- und Außenlasche erweitern den vorhandenen Spalt und begünstigen damit die Möglichkeiten für das Eindringen der Spitze des Zahnes in den Spalt. Entsprechend gibt es Begrenzungen, wie weit sich Fasen an der Außenperipherie der Laschen erstrecken dürfen, um das schädliche Aufsprengen möglichst nicht zu begünstigen.

Da sich die Innenlasche beim Abknicken des Innenlaschenkettengliedes relativ zum Außenlaschenglied relativ zur Außenlasche um den Kettenbolzen mehr oder weniger weit verdreht, kann sich die Länge des Spaltes in Abhängigkeit vom Abknickwinkel über eine nicht zu vernachlässigende Länge hinweg vergrößern oder auch verkleinern.

Abweisefasen an der Außenseite der Innenlasche dienen auch dazu, eine gute seitliche Passage der Kettenlasche seitlich am Ritzelzahn zu ermöglichen. Dieser Fall tritt zum Beispiel beim Umlegen der Kette vom größeren zum benachbarten kleineren Ritzel ein.

Eine Führungsfase hat eine geringere Erstreckung ab der äußeren Kontur der Kettenlasche in der Richtung senkrecht zur äußeren Kontur. Da in dieser Richtung ein Führungszahn an einer Kettenführungsrolle in den Laschenzwischenraum eintritt, besteht somit Übereinstimmung mit der Länge von einem Führungszahn an einer Kettenführungsrolle. Die Länge in radialer Richtung bei einem Zahn an einem Kettenrad ist größer.

Anders als Ritzelzähne können Führungszähne an einer Kettenführungsrolle ein Aufsprengen der Kette nicht verursachen. Dazu sind diese Führungszähne nicht spitz genug. Außerdem sind die an der Kettenführungsrolle wirksamen Kettenzugskräfte, die infolge des Kettenspannens durch die Kettenführung des hinteren Schaltwerkes entstehen, nicht groß genug. Dementsprechend gibt es bei den mit den Führungszähnen zusammenwirkenden Führungsfasen keine mit dem Aufsprengen der Kette verbundenen Begrenzungen bezüglich der Anordnung von Fasen an der Außenperipherie, von Laschen an den Kontaktstellen zwischen Kettenrolle und Innenlasche sowie zwischen Innenlasche und Außenlasche. Übergänge zwischen Führungsfasen und Fase am Längsüberstand können entsprechend frei gestaltet werden, auch in Hinsicht auf eine einfache Fertigung.

Ein Kontakt zwischen einem Führungszahn an einer Kettenführungsrolle und einer Innenlasche der Kette findet im Wesentlichen im Verbindungsbereich sowie am Querüberstand statt. Der Längsüberstand als Bestandteil des Überstandes der Innenlasche gegenüber der Kettenrolle um die Kettenrolle herum leistet keinen Beitrag zur Führung der Kette an einer Kettenführungsrolle, weil der Führungszahn an der Kettenführungsrolle nur kurz ausgebildet ist. Somit besteht auch die Möglichkeit, die Fase am Längsüberstand an der Führungsseite der Kette entfallen zu lassen. Außerdem besteht die Möglichkeit, die radiale Erstreckung des Längsüberstandes größer zu wählen, zum Zweck einer großen Festigkeit der Innenlasche.

Bei konventionellen, symmetrischen Ketten gibt es bei normalem Antriebfall ohne Gangumschalten keinen Kontakt zwischen Fangfasen an der Innenseite der Außenlaschen und den Ritzelzähnen. Das bedeutet, dass bei einer solchen Kette die Innenseite der Außenlaschen auch nicht in Kontakt mit den Führungszähnen an der Kettenführungsrolle geraten kann.

Mit der Aufteilung der Funktionen auf die Führungs-Seite und auf die Eingriffs-Seite bei der erfindungsgemäßen Kette kann aber die Führungs-Seite einer Außenlasche nunmehr so gestaltet werden, dass ein Kontakt zwischen Führungs-Seite der Außenlasche und Kettenführungsrolle stattfindet. Das kann durch eine Veränderung der äußeren Form der Außenlasche geschehen sowie durch Abbiegungen, wie in der US 4,741,725 gezeigt.

Eine Abweisefase an der Führungs-Seite der Außenlaschen ist schon infolge der prinzipbedingten Zuordnung der Abweise-Funktion zur Eingriffs-Seite nicht erforderlich.

Es ist prinzipiell möglich, zusätzliche, aber aus Funktions-Gründen eigentlich nicht benötigte Fangfasen und Abweisefasen an der Führungsseite der Kette vorzusehen. Das ist aber wenig sinnvoll, weil mit diesen Fasen eine Reduzierung der für die Tragfähigkeit der Laschen relevanten Querschnitte und somit eine Verringerung der Festigkeit der Kette eintritt.

Die Zuordnung der Funktionen einer Kette bezüglich Eingreifen an Ritzelzähnen einerseits und Führen an Führungszähnen von Kettenführungsrollen andererseits, ist infolge der guten Unterscheidbarkeit zwischen Eingriffs-Seite und Führungs-Seite der Kette besonders sinnvoll praktikabel an einer Kette mit asymmetrischen Laschen, aber nicht auf diese begrenzt, sondern auch an einer Kette mit symmetrischen Laschen umzusetzen. Dann wird allerdings eine auf anderen Merkmalen basierende Unterscheidbarkeit der Seiten der Kette erforderlich.

Übergänge zwischen verschiedenen Fasen sind frei gestaltbar, auch mit der Zielsetzung einer einfachen Fertigung.

Weitere Ketten mit Innen- und/oder Außengliedern gemäß den Begriffen in der Präambel von Anspruch 1 sind aus den Dokumenten JP 5 975139 B1 und DE 93 477 C bekannt. Die Kette aus Dokument EP 1 574 746 A2 zeigt ein Kettenglied gemäß der Präambel von Anspruch 13.

Die Figuren 1 bis 7 zeigen eine bekannte Kette aus dem Stand der Technik, bei der auch Merkmale genutzt werden wie bei der erfindungsgemäßen asymmetrischen Rollenkette für Fahrräder, womit das Umfeld für den Einsatz des erfindungsgemäßen Grundkonzepts der Asymmetrie der Kettenlaschen gezeigt wird.
- Fig. 1: zeigt die bekannte Kette in einer perspektivischen Ansicht.
- Fig. 2: zeigt die bekannte Kette nach Fig. 1, betrachtet in einer Richtung in der Erstreckungsebene der Kettenlaschen.
- Fig. 3: zeigt die Innenlasche der Kette nach Fig. 1 und 2 in einer perspektivischen Ansicht, betrachtet von der Innenfläche der Lasche.
- Fig. 4: zeigt die Innenlasche der Kette nach Fig. 1 und 2 in einer perspektivischen Ansicht, betrachtet von der Außenfläche der Lasche.
- Fig. 5: zeigt die Innenlasche der Kette nach Fig. 1 und 2, betrachtet von der Außenfläche der Lasche in Richtung der Lochungen für die Aufnahme der Kettenbolzen.
- Fig. 6: zeigt die Außenlasche der Kette nach Fig. 1 und 2 in einer perspektivischen Ansicht, betrachtet von der Innenfläche der Lasche.
- Fig. 7: zeigt die Außenlasche der Kette nach Fig. 1 und 2 in einer perspektivischen Ansicht, betrachtet von der Außenfläche der Lasche.
- Die Figuren 8 bis 18: zeigen eine andere Kette.

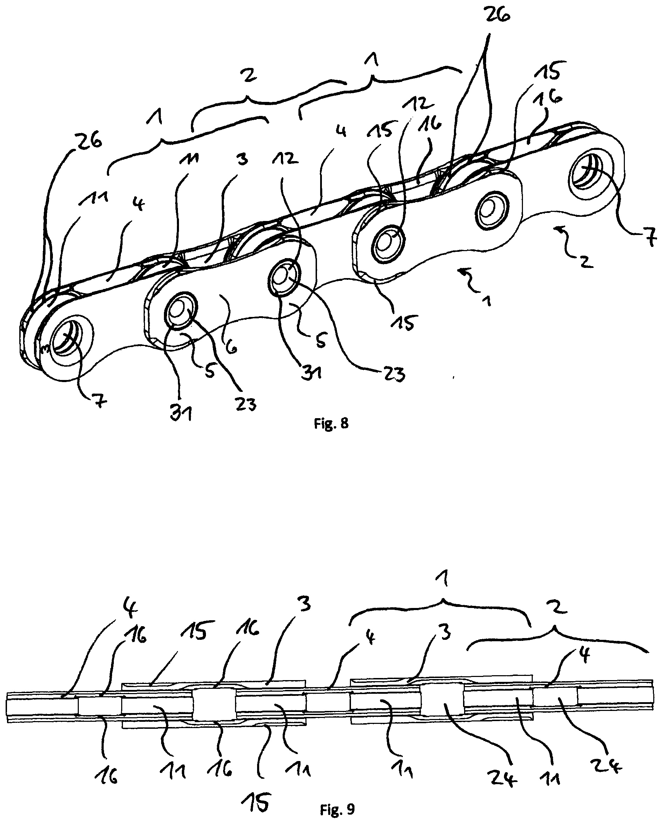

- Fig. 8: zeigt eine Kette in einer perspektivischen Ansicht.
- Fig. 9: zeigt die Kette nach Fig. 8, betrachtet in einer Richtung in der Erstreckungsebene der Kettenlaschen.

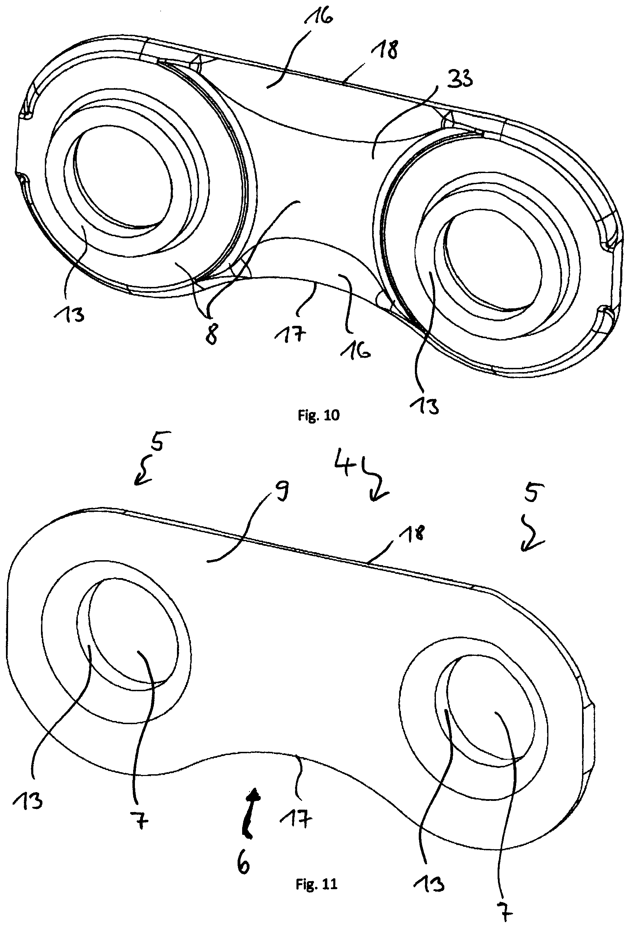

- Fig. 10: zeigt die erfindungsgemäße Innenlasche der Kette nach Fig. 8 und 9 in einer perspektivischen Ansicht, betrachtet von der Innenfläche der Lasche.
- Fig. 11: zeigt die erfindungsgemäße Innenlasche der Kette nach Fig. 8 und 9 in einer perspektivischen Ansicht, betrachtet von der Außenfläche der Lasche.

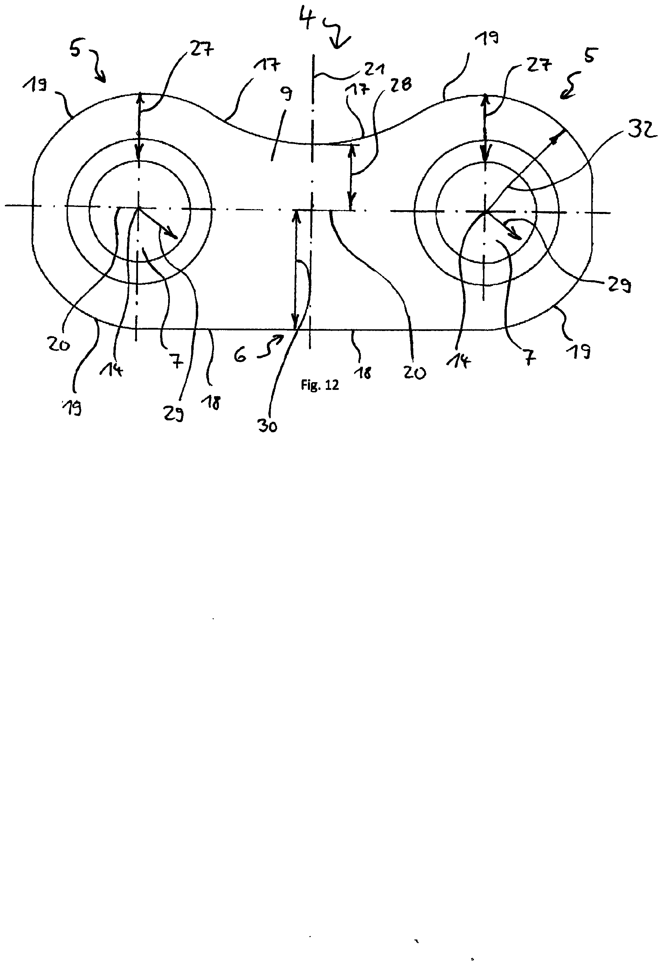

- Fig. 12: zeigt die erfindungsgemäße Innenlasche der Kette nach Fig. 8 und 9, betrachtet von der Außenfläche der Lasche in Richtung der Lochungen für die Aufnahme der Kettenbolzen.

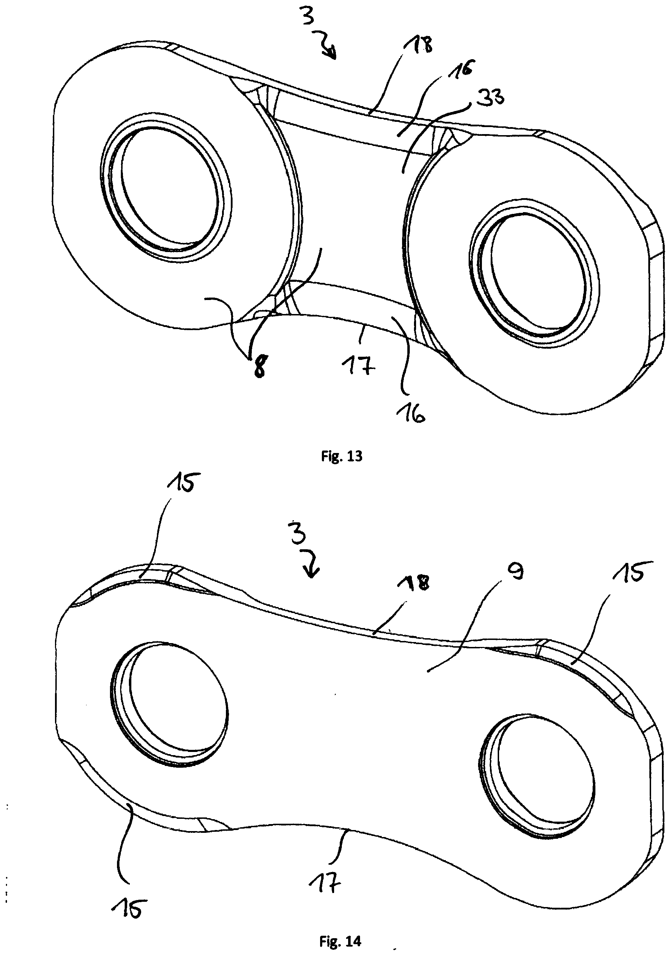

- Fig. 13: zeigt die Außenlasche der Kette nach Fig. 8 und 9 in einer perspektivischen Ansicht, betrachtet von der Innenfläche der Lasche
- Fig. 14: zeigt die Außenlasche der Kette nach Fig. 8 und 9 in einer perspektivischen Ansicht, betrachtet von der Außenfläche der Lasche.

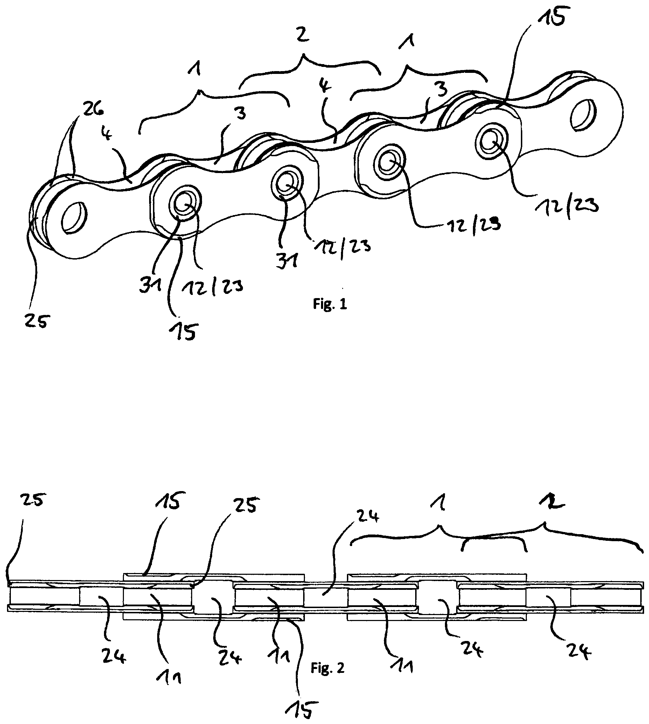

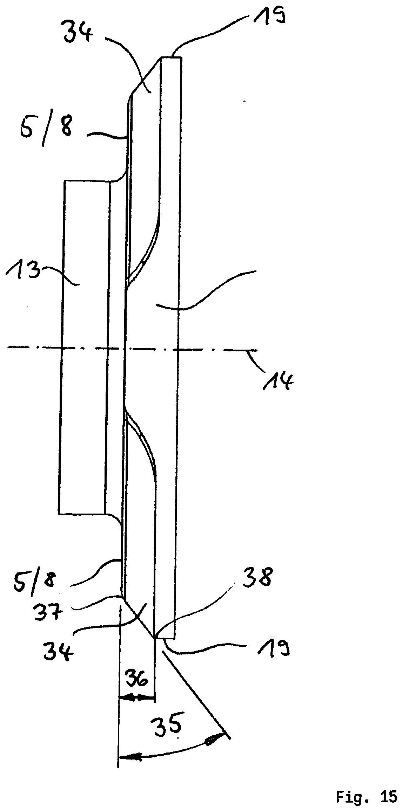

- Fig. 15: zeigt die Innenlasche der bekannten Kette nach Fig. 1 und 2, betrachtet von der Seite eines Endbereiches in Richtung der Längsachse mit einer speziellen Gestaltung der Fasen an der Außenkontur des Endbereiches.

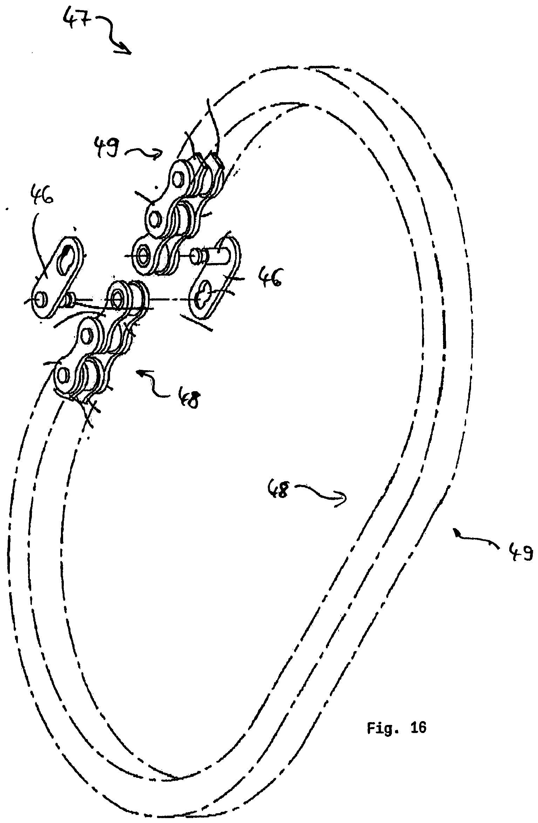

- Fig. 16: zeigt einen bekannten Kettenring in schematischer Weise, der aus einem Stück Kette durch das Verbinden der beiden Enden mittels zweier I-förmiger Verschlussglieder entsteht.

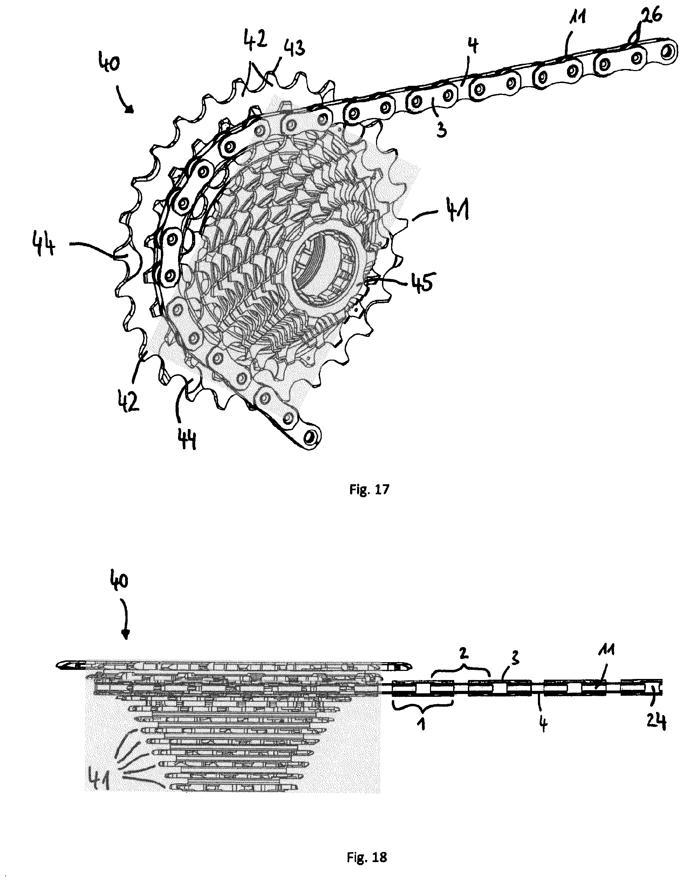

- Fig. 17: zeigt die asymmetrische Kette nach Fig. 8 und 9 im Eingriff an einem hinteren Satz von Kettenrädern (Ritzeln) in einer perspektivischen Ansicht.
- Fig. 18: zeigt Fig. 17 betrachtet in einer Richtung in der Erstreckungsebene der Kettenlaschen.

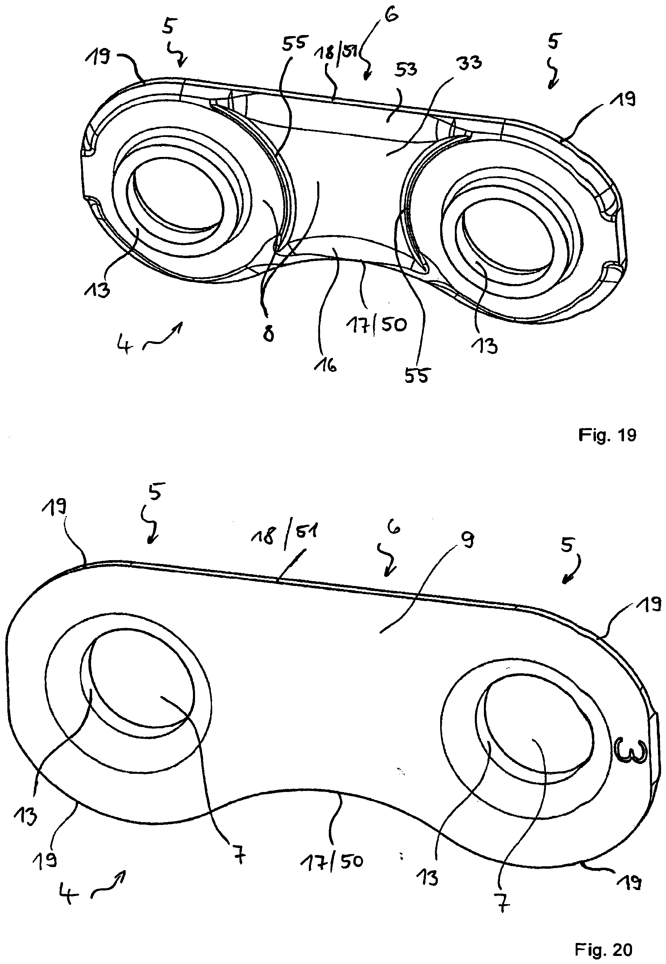

- Fig. 19: zeigt die erfindungsgemäße Innenlasche einer gegenüber der Ausführungsform der Kette nach Fig. 8 und 9 abgewandelten Ausführungsform in einer perspektivischen Ansicht, betrachtet von der Innenfläche der Lasche.
- Fig. 20: zeigt die erfindungsgemäße Innenlasche nach Fig. 19 in einer perspektivischen Ansicht, betrachtet von der Außenfläche der Lasche.

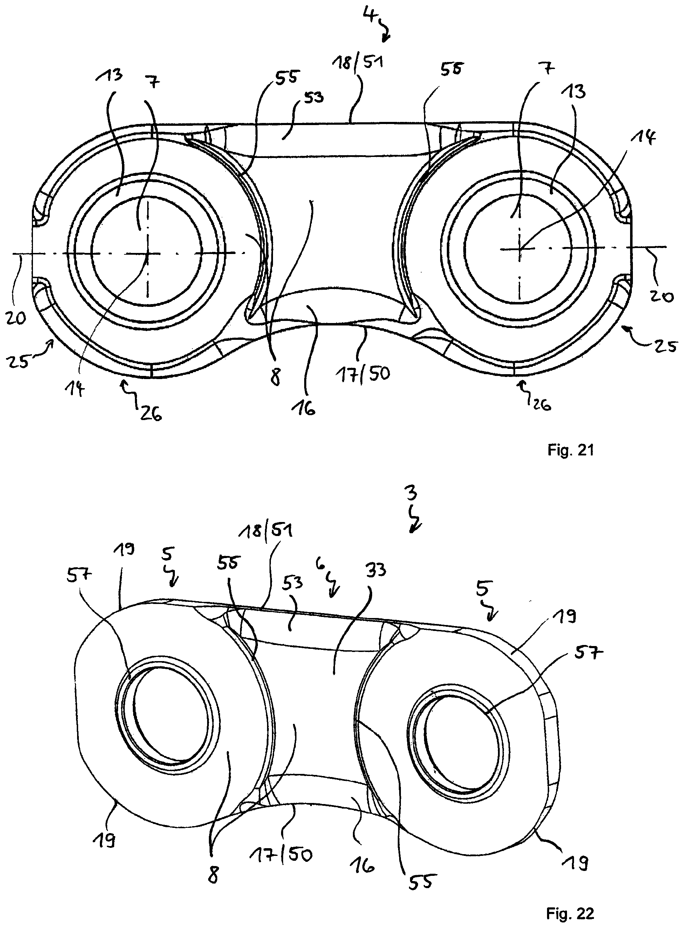

- Fig. 21: zeigt die erfindungsgemäße Innenlasche nach Fig. 19, betrachtet von der Innenfläche der Lasche in Richtung der Lochungen für die Aufnahme der Kettenbolzen.
- Fig. 22: zeigt die erfindungsgemäße Außenlasche der Kette einer gegenüber der Ausführungsform der Kette nach Fig. 8 und 9 abgewandelten Ausführungsform in einer perspektivischen Ansicht, betrachtet von der Innenfläche der Lasche

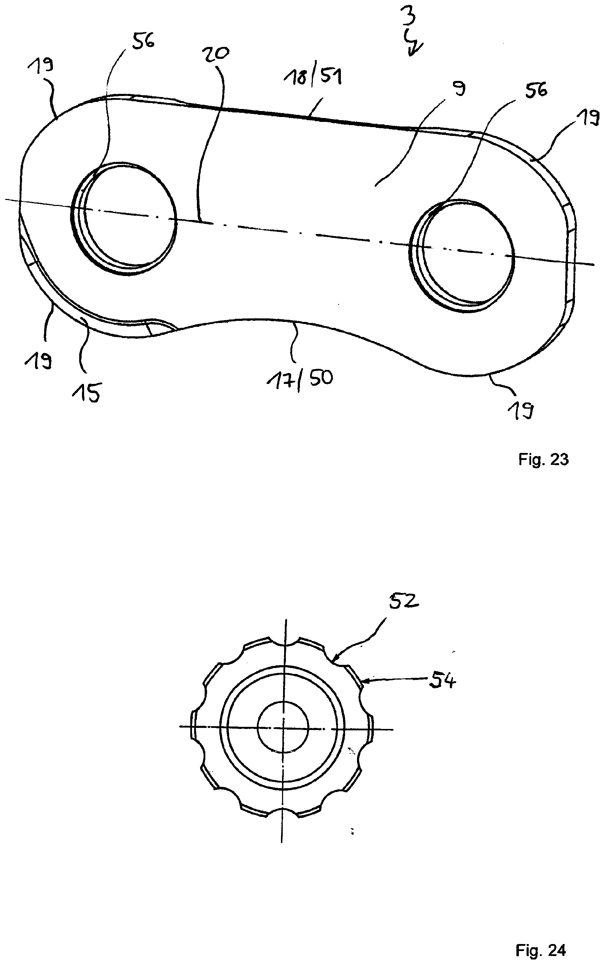

- Fig. 23: zeigt die erfindungsgemäße Außenlasche nach Fig. 22 in einer perspektivischen Ansicht, betrachtet von der Außenfläche der Lasche.
- Fig. 24: zeigt eine Kettenführungsrolle für die Kettenführung an einem hinteren Schaltwerk.

Im Folgenden wird die Erfindung einer asymmetrischen Kette im Vergleich mit einer konventionellen Kette beschrieben.

Die Figuren 1 und 8 zeigen, wie eine Rollenkette für Fahrräder aus alternierend angeordneten Innenlaschengliedern (1) und Außenlaschengliedem (2) aufgebaut ist. Ein Kettenglied (1, 2) besteht vor allem aus einem Paar von Innenlaschen (4) oder Außenlaschen (3). Die Laschen (3, 4) verfügen jeweils über zwei Endbereiche (5) mit runder Außenkontur (19), die ein Verbindungsbereich (6) mit meistens taillierter Außenkontur (17, 18) verbindet. In den Endbereichen (5) sind Lochungen (7) konzentrisch zur runden Außenkontur (19) vorgesehen.

Die alternierend angeordneten Innenlaschenglieder (2) und Außenlaschenglieder (1) sind an den Kettengelenken (23) mittels Kettenbolzen (12) drehbar miteinander verbunden. Die Kettenbolzen (12) sind in den Lochungen (7) in den Außenlaschen (3) eingepresst, während zwischen den Lochungen (7) in den Innenlaschen (4) und den Kettenbolzen (12) jeweils ein Spiel vorhanden ist, um die Drehbeweglichkeit zwischen den Kettengliedern (1, 2) zu ergeben.

Die Innenlaschen (4) haben an ihrer Innenfläche (8) jeweils Kragen (13), wobei auf einem Paar spiegelbildlich zueinander angeordneter Kragen (13) jeweils eine Kettenrolle (11) drehbar angeordnet ist. Dabei bezeichnet die Angabe "Innenfläche" die Fläche der Innenlasche (4), die einer anderen Innenlasche (4) gegenübersteht und mit dieser gemeinsam einen Laschenzwischenraum (24) bildet. Auch die Innenflächen (8) eines Paars von Außenlaschen (3) bilden einen Laschenzwischenraum (24). Die Außenflächen (9) der Laschen (3, 4) weisen vom Laschenzwischenraum (24) weg, die in den Figuren 2 und 9 gut erkennbar ist.

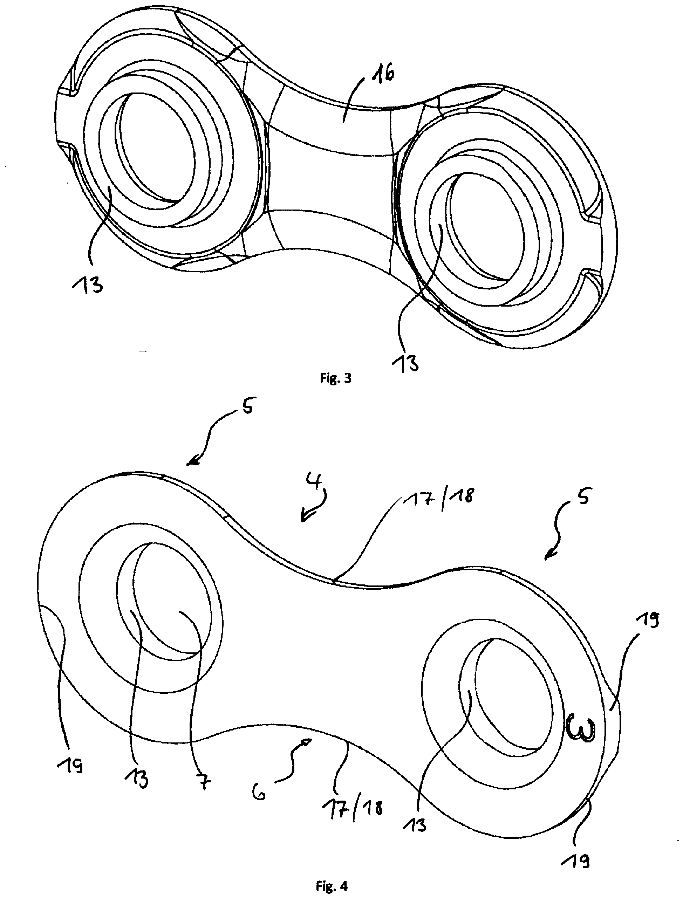

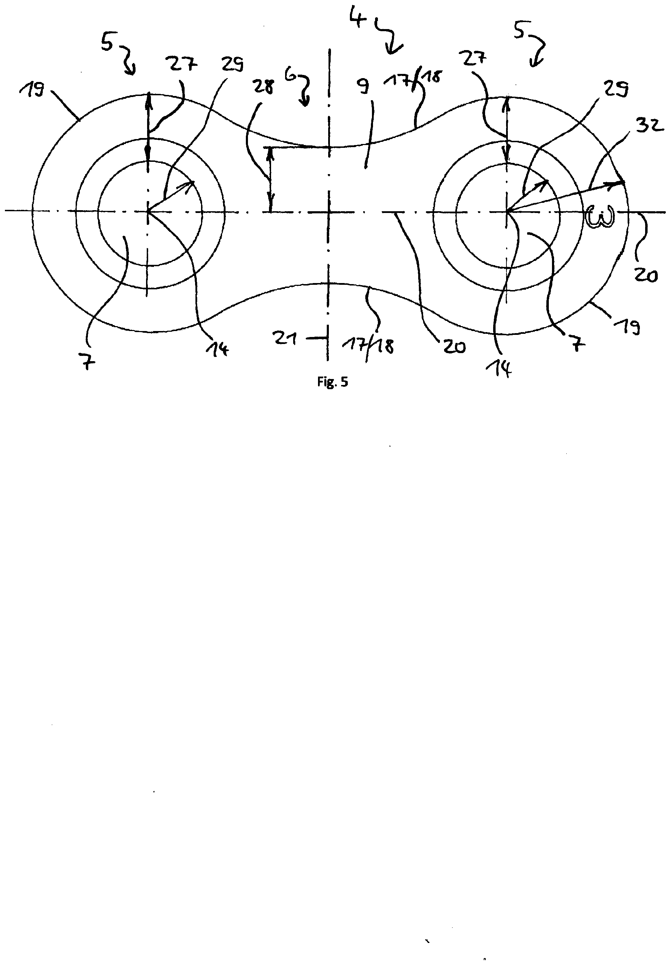

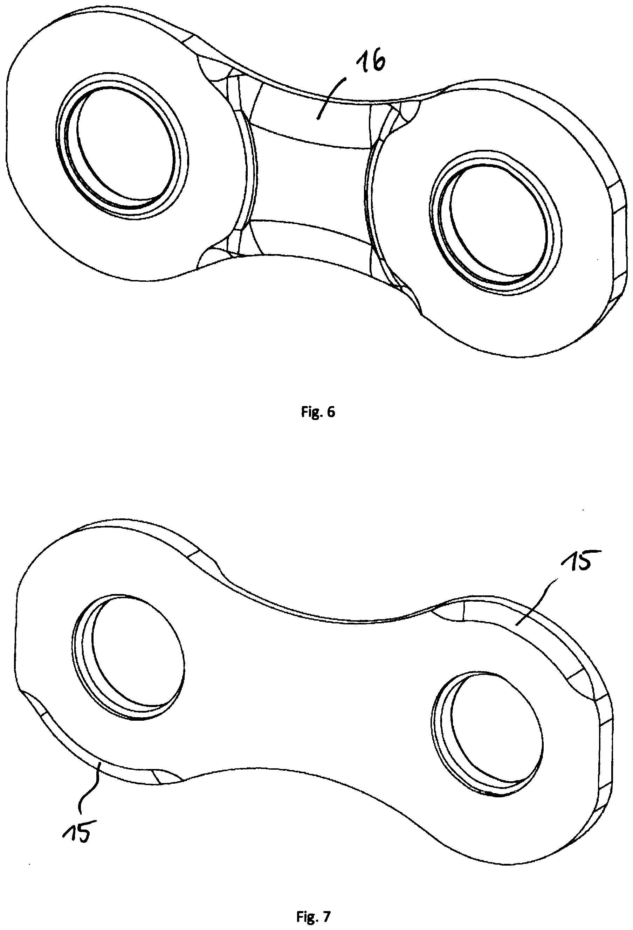

Details an den Laschen einer Kette aus dem Stand der Technik sind in den Figuren 3 bis 7 gut zu erkennen. Es ist ersichtlich, dass sowohl die Innenlaschen (4), als auch die Außenlaschen (3) in Hinsicht auf ihre Außenkontur (17, 18, 19) symmetrisch bezüglich der in der Figur 5 dargestellten Ebenen (20, 21) ausgebildet sind, die in Figur 5 als eine Längsachse (20) durch die beiden Lochungsachsen (14) und als eine Querachse (21) mittig zu den beiden Endbereichen (5) erscheinen.

Bei der Weiterentwicklung der Ketten hat sich eine schon früh gewählte Gestaltung der Kettenlaschen bewährt, bei der Gesichtspunkte der auftretenden Spannungen berücksichtigt sind. Wie in Fig. 5 gezeigt, ist ein erster Randabstand (28) bei den Innenlaschen (4) von konventionellen Ketten ebenso groß wie der Ringabstand (27), der die radiale Dicke der Ringe um die Lochung (7) in den Endbereichen (5) der Innenlasche (4) darstellt. Damit stehen sowohl im Verbindungsbereich, als auch in Summe in den beiden Bestandteilen um die Lochung für die entstehenden Zugbelastungen vergleichbar große Querschnitte zur Verfügung. In Figur 5 ist ersichtlich, wie der erste Randabstand (28) ermittelt wird, nämlich als der Abstand die Außenkontur (17 beziehungsweise 18) der Innenlasche (4) von der Längsebene (20). Der Ringabstand (27) ist zu ermitteln zwischen dem Rand der Lochung (7) und der konvexen Außenkontur (19) des betreffenden Endbereichs (5). Der erste Randabstand (28) und der Ringabstand (27) sind bei Außenlaschen (3) ebenso zu ermitteln, wie bei der exemplarischen Darstellung in Figur 5, die die Innenlasche (4) zeigt. In Figur 12 sind die Verhältnisse bei der erfindungsgemäßen Rollenkette am Beispiel der Innenlasche gezeigt. Diese Verhältnisse gelten auch für die Außenlasche der Ausführungsform, die in den Figuren 13 und 14 detailliert gezeigt ist.

Bei anderen Ausführungsformen von asymmetrischen Rollenketten können die Asymmetrieverhältnisse auch nur für die Innenlasche oder nur für die Außenlasche umgesetzt werden, ohne damit vom erfinderischen Konzept abzuweichen. Ein geschlossener Kettenring, wie in Fig. 16 dargestellt, wird mittels zweier Verschlussglieder in L-Form oder auf andere Weise aus einem Kettenstück gebildet. Dabei kommt zwangsläufig eine Außenkontur der Kette im Verbindungsbereich unveränderbar an die Innenseite des Kettenrings. Das soll erfindungsgemäß die erste Außenkontur (17) sein, die über einen konkaven Verlauf verfügt. Der erste Randabstand (28) entspricht dem Ringabstand (27) und ist damit von konventionellen Ketten übernommen. Damit werden die Kontaktverhältnisse zwischen der erfindungsgemäßen Kette und den Verzahnungen am vorderen Kettenrad, am hinteren Kettenrad sowie am unteren Kettenrührungsrad am hinteren Schaltwerk von konventionellen symmetrischen Ketten übernommen.

Die zweite Außenkontur (18) liegt der ersten Außenkontur (17) an der Lasche gegenüber. Im gezeigten Ausführungsbeispiel in Figur 12 ist die zweite Außenkontur (18) eine Gerade, die tangential an den beiden runden Außenkonturen (19) der beiden Endbereiche (5) verläuft. Der zweite Randabstand (30) wird ermittelt zwischen der Längsachse (20) und der zweiten Außenkontur (18). Er ist so groß wie die Summe von Lochungsradius (29) und Ringabstand (27) und damit deutlich größer als der erste Randabstand (28).

Der Verlauf der zweiten Außenkontur (18) kann auch konkav oder konvex sein. Der für die Außenlasche (3) in den Figuren 13 und 14 gezeigte Verlauf der zweiten Außenkontur (18) ist konkav.

In den Figuren 8, 9, 10 und 13 sind Fangfasen (16) an den Innenflächen (8) der Laschen gezeigt. Derartige Fangfasen (16) sind bekannt aus dem Stand der Technik, entsprechend der Darstellungen in den Figuren 1, 2, 3 und 6. Sie dienen dazu, den in den Laschenzwischenraum (24) eintretenden Zahn am Kettenrad diesen Eingriffsvorgang zu erleichtern, auch bei einer mit Schräglauf auf das Kettenrad auflaufenden Kette.

In den Figuren 8, 9 und 14 sind Abweisefasen (15) an den Außenflächen (9) der Außenlaschen (3) gezeigt. Derartige Abweisefasen (15) sind bekannt aus dem Stand der Technik, entsprechend der Darstellungen in den Figuren 1, 2 und 7. Sie dienen dazu, die in Kontakt mit einem Zahn am Kettenrad kommende Außenlasche (3) am Zahn abgleiten zu lassen. Mit den Abweisefasen (15) wird vermieden, dass die Kette an einem Zahn ungewollt aufreiten kann, was zu Fehleingriffen der Kette am Kettenrad und Kettenabwürfen führen kann.

Die Innenlasche (4) kann gegenüber der Kettenrolle in radialer Richtung vorstehen. Entsprechend gibt es einen Innenlaschenüberstand, der in einen Längsüberstand (25) und einen Querüberstand (26) eingeteilt werden kann, wie in den Figuren 1 und 2 dargestellt. Der Längsüberstand leistet einerseits einen Beitrag zum Führen der Kette auf den Zähnen des Kettenrades, andererseits kann er störend in Erscheinung treten bei Schaltvorgängen, z. B. beim Umlegen der Kette vom größeren zum kleineren hinteren Kettenrad. Der Querüberstand (26) ist vor allem wirksam zum Halten der Kette auf den Zähnen des Kettenrades, wenn die Kette und die Zähne miteinander voll eingegriffen haben. Damit kann dazu ein Beitrag geleistet werden, dass die Kettenglieder sich nur wenig in einer Richtung senkrecht zur Ebene des Kettenrades bewegen und somit ihre Querbeweglichkeit eingeschränkt ist.

Bei der bevorzugten Ausführungsform einer erfindungsgemäßen Kette wird ein Querüberstand (26) genutzt, während auf einen Längsüberstand (25) verzichtet wird. In Fig. 8 ist auf den Querüberstand (26) hingewiesen. In der dafür in Frage kommenden Fig. 9 findet sich in den Ecken der Laschenzwischenräume (24) kein Hinweis auf einen Längsüberstand (25). Vielmehr steht die Kettenrolle (11) leicht gegenüber der Innenlasche (4) vor.

In dem in Fig. 8 und 9 gezeigten Ausführungsbeispiel weist der Querüberstand (26) einen Fasenwinkel (35) von etwa 49 Grad auf. Die Bemessung des Fasenwinkels wird in Zusammenhang mit Figur 15 näher besprochen.

Es gibt verschiedene Möglichkeiten, in Kombination einen Querüberstand (26) aber keinen Längsüberstand (25) an einer Innenlasche (4) vorzusehen.

In Fig. 9 ist gut erkennbar, dass die Laschenzwischenräume (24) durch die zusätzlichen Aussparungen (33) in Verbindungsbereiche (6) der Innen- und Außenlaschen (4, 3) vergrößert werden. Gerade bei sehr schmalen Ketten, wie der erfindungsgemäßen Kette mit sehr schmalen Kettenrollen (11), ist der Laschenzwischenraum (24) der Innenlaschenglieder (2) besonders schmal. Die Aussparungen (33) an den Innenflächen (8) in den Verbindungsbereichen (6) der Innenlaschen (4) schaffen dennoch genügend Platz für das Eingreifen der Ritzelzähne. Die zusätzlichen Fangfasen (16) entlang der ersten und zweiten Außenkontur (17, 18) erleichtern darüber hinaus das Fangen der Ritzelzähne. Der Übergang von der Aussparung (33) zur Fangfase (16) verläuft besonders bevorzugt tangential, d. h. ohne Kanten. Damit wird ein besonders weiches und geräuscharmes Eingleiten und Ausgleiten der Ritzelzähne in die Laschenzwischenräume (24) unterstützt.

Die Aussparungen (33) können sowohl an den Innenflächen (8) der Innenlaschen (4), als auch an den Außenlaschen (3) angeordnet sein. Die Aussparungen (33) werden vorzugsweise durch Materialverformung z. B. Pressen oder durch Materialabtragung z. B. Fräsen hergestellt. Bevorzugt -bleibt die Außenfläche (9) der Lasche dabei flach, damit sie beim Schalten nicht mit einem Ritzel kollidiert. Die asymmetrische Form und der einhergehende erhöhte Querschnitt der erfinderischen Kettenlasche trägt maßgeblich dazu bei, dass die Lasche trotz der reduzierten Materialstärke im Bereich der Aussparung stabil genug ist und den zu übertragenden Kräften standhalten kann.

Fig. 10 zeigt die Innenlasche der Kette nach Fig. 8 und 9 in einer perspektivischen Ansicht, betrachtet von der Innenfläche der Lasche. Hier ist die Aussparung (33), d. h. die Absenkung des Verbindungsbereichs (6) gegenüber den beiden Endbereichen (5) deutlich sichtbar. An die Aussparung (33) schließt sich in Querrichtung gesehen jeweils eine Fangfase (16) an. Die Fangfase (16) an der ersten Außenkontur (17) ist von besonderer Bedeutung, weil diese auf der Innenseite des geschlossenen Kettenrings liegt und mit den Zähnen der hinteren und vorderen Kettenräder in Eingriff gebracht wird. Die Materialdicke im Bereich der Aussparung (33) beträgt etwa 0,6 mm. Die übrige Materialdicke der Innenlasche beträgt ansonsten etwa 0,7 mm. Die Aussparung (33) ist also etwa 0,1 mm tief.

Fig. 11 zeigt die Innenlasche der Kette nach Fig. 8 und 9 in einer perspektivischen Ansicht, betrachtet von der Außenfläche der Lasche. Die Außenfläche ist vorzugsweise flach ausgebildet.

Fig. 15 zeigt die Verhältnisse an der Fase (34) an der runden Außenkontur (19) an einem Endbereich (5). Die Fase (34) bildet mit der Innenfläche (8) eine Innenfasenkante (37) und mit der runden Außenkontur (19) eine Außenfasenkante (38). Die Fasentiefe (36) wird gemessen in einer Richtung parallel zur Lochungsachse (14) zwischen der Innenfasenkante (37) und der Außenfasenkante (38). Der Fasenwinkel (35) wird ermittelt in einer Ebene radial zur Lochungsachse (14) zwischen der Ebene der Innenfläche (8) und der Oberfläche der Fase (34). Es hat sich für bestimmte Bedingungen als günstig herausgestellt, wenn der Fasenwinkel (35) im Bereich des Innenlaschenüberstandes (25, 26) klein ist. Dann liegt die Innenfasenkante (37) radial weiter innen als die Außenkanten der Kettenrolle (11). Damit wird erreicht, dass ein in den Laschenzwischenraum (24) eintretender Zahn eines Kettenrades einen möglichst weiten "Einlauftrichter" vorfindet, der von den Oberflächen der Fasen an den beiden Innenlaschen (4) eines Laschenpaares gebildet wird. Die Zahnspitze kann dann ungehindert auf der Fase (34) nach radial innen abgleiten.

Weiterhin hat sich gezeigt, dass die Zahnspitze schnell beim Eintreten in den Laschenzwischenraum (24) ihre endgültige Position in Hinsicht auf die Richtung parallel zur Lochungsachse (14) erreicht, wenn der Fasenwinkel (35) groß ist. Ein Fasenwinkel von 51 Grad hat sich als günstig herausgestellt.

Zwischen dem Fasenwinkel von 51 Grad am Querüberstand und von 38 Grad am Längsüberstand gibt es zweckmäßigerweise einen fließenden Übergang.

In Fig. 16 ist ersichtlich, wie mittels zweier L-förmiger Verschlussglieder ein Stück Kette in einen geschlossenen Kettenring zur Antriebskraftübertragung ausgebildet wird, der über eine Innenseite und eine Außenseite verfügt.

Figur 17 zeigt eine asymmetrische Kette nach Fig. 8 und 9 im Eingriff an einem hinteren Satz von Kettenrädern in einer perspektivischen Ansicht und Figur 18 in einer Draufsicht. Die schematischen Darstellungen zeigen nur einen Teil des Antriebsstrangs, welcher üblicherweise einen geschlossenen Kettenring umfasst, der ein Schaltwerk mit zwei Kettenführungsrollen durchläuft und in eine vordere Kettenblattanordnung eingreift. Die vordere Kettenblattanordnung umfasst üblicher Weise ein, zwei oder drei Kettenblätter. Bei einer großen Anzahl von hinteren Ritzeln sind ein oder zwei vordere Kettenblätter ausreichend.

Schmale Ketten sind insbesondere für Mehrfach-Ritzelanordnungen (40) mit einer erhöhten Anzahl von elf, zwölf, dreizehn oder mehr Ritzeln (41) von Bedeutung. Aufgrund des geringen Bauraums in axialer Richtung, müssen die Ritzel (41) in sehr geringen Abständen zueinander positioniert werden. Die gezeigte Ritzelanordnung (40) umfasst genau zwölf Ritzel (41), die in vorgegebenen Abständen zueinander positioniert sind. Um den Folgen des Kettenschräglaufs entgegenzuwirken, sind die kleineren Ritzel, insbesondere die kleinsten sechs Ritzel in einem etwas größeren Abstand zueinander angeordnet, als die größeren Ritzel, insbesondere die größten sechs Ritzel. Am kleinsten Ritzel (41) ist zusätzlich eine ringförmige Wulst (45) angeordnet, die die Kette in axialer Richtung nach außen drückt und damit die Folge von Kettenschräglauf reduziert. Die gezeigte Kette greift in die Zähne (42) des drittgrößten Ritzels (41) der Mehrfach-Ritzelanordnung (40) ein. Die Kette muss so schmal bemessen sein, dass sie in die Freiräume zwischen den Ritzeln (41) passt, ohne mit dem nächstkleineren oder nächstgrößeren Ritzel zu kollidieren. Die Abweisefasen und Fangfasen an den Außen- und Innenflächen der Laschen wirken beim Schalten von einem zum nächsten Ritzel mit den Fasen (43) der Zähne (42) der Ritzel (41) zusammen. Die Ritzel (41) weisen Schaltmerkmale (44) auf, die das Schalten ermöglichen. Außerdem können insbesondere die größten beiden Ritzel (41) in axialer Richtung unterschiedlich dick ausgebildete Zähne (42) aufweisen, die sich positiv auf die Kettenführung auswirken. Die Verdickung der Zähne (42) ist bevorzugter Weise auf der Rückseite der Ritzel ausgebildet und hier nicht sichtbar. Dabei ist die Verdickung an den dicken Zähnen so bemessen, dass ein dicker Zahn in den Laschenzwischenraum (24) eines Außenlaschengliedes (1) passt, aber nicht in den kleineren Laschenzwischenraum (24) eines Innenlaschengliedes (2). Bei Ritzeln mit einer geraden Anzahl von Zähnen können sich dicke und dünne Zähne entlang des Umfangs abwechseln. Die angedeutete Kette steht mit der gezeigten Mehrfach-Ritzelanordnung (40) und einer hier nicht gezeigten vorderen Kettenblatt-Anordnung mit zwei Kettenblättern in Eingriff. Bei Ausführungen mit nur einem Kettenblatt, kann die Kettenführung am vorderen Kettenblatt ebenfalls durch den Einsatz von alternierenden dicken und dünnen Zähnen verbessert werden.

Die erfindungsgemäße Kette ist besonders schmal gebaut. Zum einen erlauben die asymmetrischen Laschen (3, 4) eine sehr geringe Laschendicke - der Ausgleich des Materialquerschnitts im Verbindungsbereich der Laschen führt zu einer annähernd gleichbleibenden Zugfestigkeit der Laschen. Des Weiteren kann die Zugfestigkeit der Laschen (3, 4) zusätzlich erhöht werden, wenn auch die Durchmesser der Endbereiche (5) vergrößert werden. Auch an den Endbereichen (5) kann so der Materialschnitt einer dünneren Lasche ausgeglichen werden. Bei einem gleichbleibenden Durchmesser der Lochung (7) und einem vergrößertem Durchmesser der Endbereiche (5), vergrößert sich also auch der Ringabstand (27), was die Zugfestigkeit der Lasche weiter erhöht - vergleiche hierzu Figur 12.

Zum anderen können zusätzlich besonders schmale Kettenrollen (11) mit einem erhöhten Kettenrollendurchmesser zum Einsatz kommen, die ebenfalls dazu beitragen, die Gesamtbreite der Kette zu reduzieren. Der erhöhte Kettenrollendurchmesser trägt dazu bei, die Flächenpressung zwischen Kettenrolle und Lastflanke des Zahns zu reduzieren. Der erhöhte Kettenrollendurchmesser führt zu einer erhöhten Auflagefläche zwischen Kettenrolle und Lastflanke des Zahns und gleicht somit die reduzierte Kettenrollenbreite aus. Außerdem erlaubt ein erhöhter Kettenrollendurchmesser zusammen mit einem erhöhten Durchmesser der Endbereiche (5) der Innenlaschen (4) einen gleichbleibenden Querüberstand (26) der Innenlasche (4) über die Kettenrolle (11) hinaus - vgl. hierzu auch Figur 8.

Die angesprochenen Maßnahmen zur Reduzierung der Kettengesamtbreite, (Ausgleich des Materialquerschnitts im Verbindungsbereich und/oder an den Endbereichen der Laschen - Zugfestigkeit, Ausgleich der Auflagefläche zwischen Kettenrolle und Zahn - Flächenpressung) können separat oder kombiniert angewendet werden. Eine besonders schmale, stabile und verschleißfeste Kette wird erzielt, wenn die Maßnahmen kombiniert werden.

Die zweite Ausführungsform einer erfindungsgemäßen Innenlasche (4) ist in den Figuren 19 und 20 in einer perspektivischen Darstellung und in der Figur 21 in einer Ansicht mit Blickrichtung senkrecht zur Außenfläche (9) (bzw. parallel zu den Lochungsachsen (14)) dargestellt. Wesentliche Merkmale sind von der Ausführungsform gemäß den Figuren 8 bis 15 übernommen worden.

Die zweite Ausführungsform verwirklicht konsequenter als die Ausführungsform nach den Figuren 8 bis 15 die Grundsätze, an der Führungs-Seite (51) der Kette lediglich Führungsfasen (53), aber keine Fangfasen (16) und auch keine Abweisefasen (15) anzuordnen.

Die Innenlasche (4) verfügt über zwei runde Endbereiche (5), die durch den Verbindungsbereich (6) verbunden sind. Die zweite Außenkontur (18) hat einen geradlinigen Verlauf und geht tangential in die Außenkontur an den beiden runden Endbereichen (5) über. Im Wesentlichen konzentrisch zur runden Außenkontur (19) der runden Endbereiche (5) sind Lochungen (7) vorhanden. Jeder der Lochungsachsen (14) ist auch die Achse von je einem hohlzylinderförmigen Kragen (13) an der Innenfläche (8) der Innenlasche (4).

In Figur 20 ist die ebene Außenfläche (9) der Innenlasche (4) erkennbar. Der Abstand zwischen der Außenfläche (9) und der Innenfläche (8) radial unmittelbar außerhalb der Kragen (13) entspricht der Materialdicke.

Die Materialdicke der Innenlaschen (4) bei den zwei Ausführungsformen der erfindungsgemäßen Kette nach den Figuren 8 bis 18 sowie 19 bis 23 beträgt 0,73 Millimeter, im Gegensatz zu 0,77 Millimetern bei einer Klette gemäß den Figuren 1 bis 7.

Der Abstand zwischen der Außenfläche (9) und der Innenfläche (8) im Verbindungsbereich (6) ist gegenüber der Materialdicke reduziert, infolge der Anordnung einer Aussparung (33), die sich auf derselben Seite der Innenlasche (4) wie die Kragen befindet. Zwischen der Innenfläche (8) um einen Kragen (13) und der Innenfläche (8) am Verbindungsbereich (6) ist infolge der Aussparung (33) eine Stufe (55) gebildet. Diese Stufe (55) ist konzentrisch zur Lochungsachse (14). Die zweite Außenkontur (18) an der Innenlasche (4) entspricht der Führungs-Seite (51) der zu einem Kettenring gefügten Kette. Entsprechend befindet sich an der zweiten Außenkontur (18) eine Führungsfase (53) zwischen der Innenfläche (8) am Verbindungsbereich (6) und der runden Außenkontur (19) an beiden Endbereichen (5) zum Zusammenwirken mit der Kettenführungsrolle eines hinteren Schaltwerkes. Dem geraden Verlauf der zweiten Außenkontur (18) folgend hat die Führungsfase (53) ebenso einen geraden Verlauf und geht an ihren beiden Ende über in die Fase (34) an der runden Außenkontur (19).

Zwischen der Führungsfase (53) und der Innenfläche (8) am Verbindungsbereich (6) kann sowohl eine scharfe Kante, oder ein verrundeter Übergang bestehen.

Die erste Außenkontur (17) an der Innenlasche (4) entspricht der Eingriffs-Seite (50) der zu einem Kettenring gefügten Kette. Entsprechend befindet sich an der ersten Außenkontur (17) eine Fangfase (16) zwischen der Innenfläche (8) am Verbindungsbereich (6) und der runden Außenkontur (19) an beiden Endbereichen (5) zum Zusammenwirken mit einem Zahn an einem Ritzel. Entsprechend des bogenförmigen Verlaufs der ersten Außenkontur (17) hat die Fangfase (16) ebenfalls einen bogenförmigen Verlauf. Die Fangfase (16) geht an ihren beiden Enden zuerst in eine Übergangsfläche und dann in die Fase (34) an der runden Außenkontur (19) über. Die Ausbildung einer Übergangsfläche entspricht dem Bestreben, einen möglichst weichen Übergang zu gestalten, und auch um zu vermeiden, dass ein spürbarer Spalt zwischen der Innenlasche (4) und der in montiertem Zustand der Kette jeweils an den Kragen (13) drehbar gelagerten Kettenrollen (11). Ein Spalt an dieser Stelle würde unter Umständen das Eindringen einer Spitze eines Ritzelzahnes mit der Gefahr des Aufsprengens der Kette erlauben.

Zwischen der Fangfase (16) und der Innenfläche (8) am Verbindungsbereich (6) kann sowohl eine scharfe Kante, oder ein verrundeter Übergang bestehen. Besonders gut ist in Fig. 21 erkennbar, dass die runde Außenkontur (19) an den beiden Endbereichen (5) nicht exakt konzentrisch zur Lochungsachse (14) angeordnet ist. Der radiale Abstand zwischen Lochungsachse (14) in Richtung der Längsachse (20) der Innenlasche (4) geht in die Gesamtlänge der Innenlasche ein. Diese Gesamtlänge wurde gegenüber Ausführungsformen der Innenlasche beibehalten, während der radiale Abstand der runden Außenkontur (19) von der Lochungsachse (14) in einer Richtung senkrecht zur Längsachse (20) gemeinsam mit der runden Außenkontur (19) der Innenlasche (4) vergrößert und somit nach radial außen verlagert wurde. Die gleichsinnige Verlagerung der runden Außenkontur (19) von Außenlasche (3) und Innenlasche (4) nach radial außen sind Maßnahmen bei der Verwirklichung einer in einer Richtung parallel zur Achse der Kettenbolzen (12) gemessenen Breite der Kette mit der Verringerung der Dicke des Materials der Innenlasche (4) und der in Richtung parallel zum Kettenbolzen (12) gemessenen Breite der Kettenrolle (11).

Der Durchmesser der Kettenrolle (11) bei den zwei Ausführungsformen der erfindungsgemäßen Kette nach den Figuren 8 bis 18 sowie 19 bis 23 beträgt 7,9 Millimeter, im Gegensatz zu 7,7 Millimetern bei einer Klette gemäß den Figuren 1 bis 7.

Die Breite der Kettenrolle (11) bei den zwei Ausführungsformen der erfindungsgemäßen Kette nach den Figuren 8 bis 18 sowie 19 bis 23 beträgt 1,85 Millimeter, im Gegensatz zu 1,7 Millimetern bei einer Klette gemäß den Figuren 1 bis 7.

Die Fase (34) hat entlang ihres Verlaufs an der runden Außenkontur (19) einen variablen Fasenwinkel (35). Damit ist den unterschiedlichen Anforderungen am Längsüberstand (25) im Vergleich zum Querüberstand (26) Rechnung getragen, wie das detailliert in Verbindung mit Fig. 15 beschrieben ist.

Am Querüberstand (26) ist der gegenüber der (nicht dargestellten) Kettenrolle vorstehende Anteil der Innenfläche (8) ohne Fase in radialer Richtung breiter als am Längsüberstand (25). Damit hat der Querüberstand beim Eintreten eines Ritzelzahnes in den Laschenzwischenraum eine besonders gut zentrierende Wirkung auf den Ritzelzahn.

Eine Abwandlung der Figuren 19 bis 21 ist in Hinsicht auf die Ausbildung der Führungs-Seite (51) der Innenlasche (4) möglich.

Der Längsüberstand (25) mit der Fase (34), oder zumindest diese Fase (34) allein, müsste sich nicht so weit in Richtung der Längsachse (20) erstrecken, sondern sie könnte kürzer ausgebildet sein, weil der Kontakt mit einem Führungszahn an einer Kettenführungsrolle dort ohnehin nicht mehr stattfinden könnte. Entsprechend würde dann an der Führungs-Seite die Erstreckung der Fase (34) am Längsüberstand hin bis zur Längsachse (20) und eventuell noch über die Längsachse (20) hinaus verlängert. Das könnte so gestaltet werden, dass der in Fig. 21 beidseitig der Längsachse (20) angeordnete Längsüberstand (25) ohne Fase (34) auf die Führungs-Seite (51) verlagert würde.

Die zweite Ausführungsform einer erfindungsgemäßen Außenlasche (3) ist in den Figuren 22 und 23 in einer perspektivischen Darstellung gezeigt. Wesentliche Merkmale sind von der Ausführungsform gemäß den Figuren 13 und 14 übernommen worden.

Bei der zweiten Ausführungsform ist von der ersten Ausführungsform die Anordnung von zwei runden Endbereichen (5), die durch den Verbindungsbereich (6) verbunden sind, übernommen worden.

Die zweite Außenkontur (18) hat einen geradlinigen Verlauf und geht tangential in die runde Außenkontur (19) an den beiden runden Endbereichen (5) über.

Im Wesentlichen konzentrisch zur runden Außenkontur (9) der runden Endbereiche (5) sind Lochungen (7) mit den zugeordneten Lochungsachsen (14) vorhanden, deren Rand gegenüber der Außenseite (9) der Außenlasche (3) eine umlaufende Einsenkung (56) zur Aufnahme des aufgeweiteten Endes des Kettenbolzens (12) und auf der Seite der Innenflächen (8) einen umlaufenden Bund (57) aufweist. Damit wird trotz der Einsenkung (56) eine große Kontaktfläche zwischen Lochung und Kettenbolzen (12) erreicht, was günstig für die Erzielung einer großen Haltekraft zwischen Kettenbolzen (12) und Außenlasche (3) ist.

In Figur 23 ist die im Wesentlichen ebene Außenfläche (9) der Außenlasche (3) erkennbar. Figur 22 zeigt die Innenfläche (8) der Außenlasche (3), die mit Ausnahme des Bundes am Rand der Lochung (7) ebenfalls eben ist.

Der Abstand zwischen der Außenfläche (9) und der Innenfläche (8) radial unmittelbar außerhalb des Bundes entspricht der Materialdicke.

Die Materialdicke der Außenlasche (3) bei den zwei Ausführungsformen der erfindungsgemäßen Kette nach den Figuren 8 bis 18 sowie 19 bis 23 beträgt 0,75 Millimeter, im Gegensatz zu 0,80 Millimetern bei einer Klette gemäß den Figuren 1 bis 7.

Der Abstand zwischen der Außenfläche (9) und der Innenfläche (8) im Verbindungsbereich (6) ist gegenüber der Materialdicke reduziert infolge der Anordnung einer Aussparung (33), die sich auf derselben Seite der Innenlasche (4) wie der Bund befindet. Zwischen der Innenfläche (8) um einen Kragen (13) und der Innenfläche (8) am Verbindungsbereich (6) ist infolge der Aussparung (33) eine Stufe (55) gebildet. Diese Stufe (55) ist konzentrisch zur Lochungsachse (14).

Die zweite Außenkontur (18) an der Außenlasche (3) entspricht der Führungs-Seite (51) der zu einem Kettenring gefügten Kette. Entsprechend befindet sich an der zweiten Außenkontur (18) eine Führungsfase (53) zwischen der Innenfläche (8) am Verbindungsbereich (6) und der runden Außenkontur (19) an beiden Endbereichen (5) zum Zusammenwirken mit der Kettenführungsrolle eines hinteren Schaltwerkes. Dem geraden Verlauf der zweiten Außenkontur (18) folgend hat die Führungsfase (53) ebenso einen geraden Verlauf und geht an ihren beiden Enden in die Fase (34) an der runden Außenkontur (19) über.

Zwischen der Führungsfase (53) und der Innenfläche (8) am Verbindungsbereich (6) kann sowohl eine scharfe Kante, oder ein verrundeter Übergang bestehen. Die erste Außenkontur (17) an der Außenlasche (3) entspricht der Eingriffs-Seite (50) der zu einem Kettenring gefügten Kette. Entsprechend befindet sich an der ersten Außenkontur (17) eine Fangfase (16) zwischen der Innenfläche (8) am Verbindungsbereich (6) und der runden Außenkontur (19) an beiden Endbereichen (5) zum Zusammenwirken mit einem Zahn an einem Ritzel oder einem Kettenring. Entsprechend des bogenförmigen Verlaufs der ersten Außenkontur (17) hat die Fangfase (16) ebenfalls einen bogenförmigen Verlauf. Die Fangfase (16) geht an ihren beiden Enden zuerst in eine Übergangsfläche und dann in die Fase (34) an der runden Außenkontur (19) über. Die Ausbildung einer Übergangsfläche entspricht dem Bestreben, einen möglichst weichen Übergang zu gestalten und auch um zu vermeiden, dass ein spürbarer Spalt zwischen der Außenlasche (3) und der benachbarten Innenlasche (4) entsteht. Ein Spalt an dieser Stelle würde unter Umständen das Eindringen einer Spitze eines Ritzelzahnes mit der Gefahr des Aufsprengens der Kette erlauben.

Zwischen der Fangfase (16) und der Innenfläche (8) am Verbindungsbereich (6) kann sowohl eine scharfe Kante, oder ein verrundeter Übergang bestehen. Zwischen der vorlaufenden Seite der Eingriffs-Seite (50) der Außenlasche (3) an der Außenfläche (9) der runden Außenkontur (19) und der Außenfläche (9) der Außenlasche (3) ist in bekannter Weise eine Abweisefase (15) vorhanden. An der Führungs-Seite (51) der Außenlasche (3) wird auf Abweisefasen komplett verzichtet. Eine gegenüber der in den Figuren 19 bis 23 dargestellten zweiten Ausführungsform der Kettenlaschen (3, 4) ist eine weitere Abwandlung an der Führungs-Seite (51) möglich. Sowohl die runde Außenkontur (19) an den Endbereichen (5), oder die zweite Außenkontur (18) am Verbindungsbereich (6) können weiter weg von der Längsachse (20) verlagert werden. Das kann vorgenommen werden, um den Kontakt zwischen der Führungs-Seite (51) der Kette und einer Kettenführungsrolle eines hinteren Schaltwerkes noch zu verbessern.

**Bezugszeichenliste**

| | | | |
|---|---|---|---|
| 1 | Außenlaschenglied | 34 | Fase |
| 2 | Innenlaschenglied | 35 | Fasenwinkel |
| 3 | Außenlasche | 36 | Fasentiefe |
| 4 | Innenlasche | 37 | Faseninnenkante |
| 5 | Endbereich | 38 | Fasenaußenkante |
| 6 | Verbindungsbereich | 40 | Mehrfach-Ritzelanordnung |
| 7 | Lochung | 41 | Ritzel |
| 8 | Innenfläche | 42 | Zahn |
| 9 | Außenfläche | 43 | Fasen |
| 11 | Kettenrolle | 44 | Schaltmerkmal |
| 12 | Kettenbolzen | 45 | Ringförmige Wulst |
| 13 | Kragen | 46 | Kettenverschlussglied |
| 14 | Lochungsachse | 47 | Kettenring |
| 15 | Abweisefase | 48 | Innenseite |
| 16 | Fangfase | 49 | Außenseite |
| 17 | erste Außenkontur | 50 | Eingriffs-Seite |
| 18 | zweite Außenkontur | 51 | Führungs-Seite |
| 19 | runde Außenkontur | 52 | Kettenführungsrolle |
| 20 | Längsachse / Längsebene | 53 | Führungsfase |
| 21 | Querachse / Querebene | 54 | Führungszahn |
| 23 | Kettengelenk | 55 | Stufe |
| 24 | Laschenzwischenraum | 56 | Einsenkung |
| 25 | Längsüberstand | 57 | Bund |
| 26 | Querüberstand | | |
| 27 | Ringabstand | | |
| 28 | Taillenabstand | | |
| 29 | Lochungsradius | | |
| 30 | Randabstand | | |
| 31 | Kettenbolzenende | | |
| 32 | Endabschnittradius | | |
| 33 | Aussparung | | |

## Patentansprüche

1. Rollenkette für Fahrräder mit Außenlaschen (3) und Innenlaschen (4), jeweils aufweisend
- eine Innenfläche (8) der Lasche (3, 4) und eine Außenfläche (9) der Lasche (3, 4), die auch die Außenfläche der montierten Kette darstellt;
- zwei Endbereiche (5) mit jeweils runder Außenkontur (19) und einer zur runden Außenkontur (19) im Wesentlichen konzentrisch angeordneten zylinderförmigen Lochung (7) mit jeweils einer geometrischen Lochungsachse (14), und
- mit einer Längsebene (20) durch die Lochungsachse (14) der in den zwei Endbereichen (5) befindlichen Lochungen (7),
- mit einer Querebene (21), die die Symmetrie-Ebene zu den Lochungsachsen (14) der in den zwei Endbereichen (5) befindlichen Lochungen (7) darstellt,
- einem Verbindungsbereich (6), der die zwei Endbereiche (5) verbindet, mit einer ersten Außenkontur (17), die konkav ist, auf der einen Seite relativ zur Längsachse (20) und mit einer zweiten Außenkontur (18) auf der zur ersten Außenkontur (17) entgegengesetzten Seite relativ zur Längsachse (20)
- wobei ein erster Randabstand (28) zwischen der ersten Außenkontur (17) des Verbindungsbereiches (6) und der Längsebene (20) so groß ist wie der in einer Richtung parallel zur Querachse (21) gemessene Ringabstand (27) zwischen dem Rand der Lochung (7) und der runden Außenkontur (19) des Endbereiches (5),
wobei ein zweiter Randabstand (30) zwischen der zweiten Außenkontur (18) des Verbindungsbereiches (6) und der Längsachse (20) mindestens um den halben Lochungsradius (29) der Lochung (7) größer ist als der erste Randabstand (28), wobei die zweite Außenkontur (18) sich an die runden Außenkonturen (19) der zwei Endbereiche (5) anschließt und einen geraden Verlauf hat, wobei der zweite Randabstand (30) so groß ist wie ein Endabschnittsradius (32) der Endbereiche (5),
**dadurch gekennzeichnet, dass**
der durch ein Verbinden der beiden Enden eines Kettenstückes miteinander entstandene Kettenring eine Ringinnenseite und eine Ringaußenseite aufweist und die jeweils gerade zweite Außenkontur (18) des Verbindungsbereiches (6) der Außen- und Innenlaschen (3, 4) zur Ringaußenseite weist.

2. Rollenkette für Fahrräder nach Anspruch 1 mit Kettenbolzen (12) und Kettenrollen (11), wobei die Kettenbolzen (12) drehbar in den Lochungen (7) der Innenlaschen (4) und drehfest in den Lochungen der Außenlaschen (3) aufgenommen sind;
wobei die Innenlaschen (4) auf ihrer Innenfläche Kragen (13) in der Form von Zylinderringen aufweisen, deren Innenraum jeweils konzentrisch zu jeweils einer der Lochungen (7) ist und denselben Durchmesser wie die Lochungen (7) aufweisen und die Kettenrollen (11) drehbar auf je einem Paar gegenüberliegender Kragen (13) gelagert sind.

3. Rollenkette für Fahrräder nach Anspruch 1 oder 2,
**dadurch gekennzeichnet, dass** die Bolzenenden (31) nicht gegenüber den Außenflächen (9) der Außenlaschen (3) vorstehen.

4. Rollenkette für Fahrräder nach einem der Ansprüche 1 bis 3,
**dadurch gekennzeichnet, dass** der in einer Richtung parallel zur Querachse (21) gemessene Abstand der runden Außenkontur (19) des Endbereichs (5) der Innenlasche (4) größer ist, als der Radius der Kettenrolle (11), wodurch ein Querüberstand (26) der Innenlasche (4) gegenüber der Kettenrolle (11) gebildet wird.

5. Rollenkette für Fahrräder nach einem der Ansprüche 1 bis 3,
**dadurch gekennzeichnet, dass** der in einer Richtung parallel zur Längsachse (20) gemessene Abstand der runden Außenkontur (19) des Endbereichs (5) der Innenlasche (4) größer ist, als der Radius der Kettenrolle (11), wodurch ein Längsüberstand (25) der Innenlasche (4) gegenüber der Kettenrolle (11) gebildet wird.

6. Rollenkette für Fahrräder nach Anspruch 4 oder 5,
**dadurch gekennzeichnet, dass** am Querüberstand (26) und/oder am Längsüberstand (25) eine Fase (34) vorhanden ist.

7. Rollenkette für Fahrräder nach Anspruch 6,
**dadurch gekennzeichnet, dass** der Fasenwinkel (35) zwischen der Innenfläche (8), der Innenlasche (4) und der Fase (34) unterschiedlich groß ist.

8. Rollenkette für Fahrräder nach einem der Ansprüche 4 bis 7, **dadurch gekennzeichnet, dass** der Fasenwinkel (35) am Längsüberstand (25) 38 Grad und am Querüberstand (26) 51 Grad groß ist.

9. Rollenkette für Fahrräder nach Anspruch 2 oder 3,
**dadurch gekennzeichnet, dass** der Mittelpunkt des Kreises der runden Außenkontur (19) des Endbereiches (5) gegenüber der Lochungsachse (14) in Richtung der Längsachse (20) verschoben ist.

10. Rollenkette für Fahrräder nach einem der Ansprüche 1 bis 3,
**dadurch gekennzeichnet, dass** die Materialdicke der Innenlasche (4) mehr als 0,7 und weniger als 0,8 Millimeter beträgt.

11. Rollenkette für Fahrräder nach einem der Ansprüche 1 bis 3,
**dadurch gekennzeichnet, dass** die Innenlasche (4) im Verbindungsbereich (6) an der Innenfläche (8) eine Aussparung (33) aufweist, wodurch sich im Verbindungsbereich (6) der Abstand der Innenfläche (8) von der Außenfläche (9) auf insbesondere 0,6 Millimeter reduziert.

12. Rollenkette für Fahrräder nach einem der Ansprüche 1 bis 3,
**dadurch gekennzeichnet, dass** der durch ein Verbinden der beiden Enden eines Kettenstücks miteinander entstandene Kettenring eine Ringinnenseite und eine Ringaußenseite aufweist, wobei an den Innenlaschen (4) an der zur Ringaußenseite weisenden Seite Formelemente vorhanden sind, die geeignet sind, den von der Ringinnenseite in den Laschenzwischenraum (24) eingedrungenen Zahn eines Kettenrades zu führen und auszurichten.

13. Rollenkette für Fahrräder mit in Bezug auf ihre Längsachse (20) asymmetrischen Außenlaschen (3) und Innenlaschen (4), Kettenbolzen (12) und Kettenrollen (11), wobei die Kettenbolzen (12) drehbar in den Lochungen (7) der Innenlaschen (4) und drehfest in den Lochungen (7) der Außenlaschen (3) aufgenommen sind,
wobei die Innen- und Außenlaschen (3, 4) an der Außenperipherie auf der einen der zwei Seiten relativ zur Längsachse (20) durch die Mitten der Lochungen (7) eine Eingriffs-Seite (50) haben und auf der anderen der zwei Seiten relativ zur Längsachse (20) eine Führungs-Seite (51) haben;
wobei die Eingriffs-Seiten (50) der Innen- und Außenlaschen (3, 4) Fangfasen (16) und Abweisefasen (15) für das Zusammenwirken mit den Zähnen an den hinteren und vorderen Kettenrädern aufweisen, und
dass die Führungsseiten (51) der Innen- und Außenlaschen (3,4) Führungsfasen (53) aufweisen, so dass die Rollenkette beim Kontakt mit der Kettenführungsrolle (52) eines hinteren Schaltwerks durch die Kettenführungsrolle (52) geführt wird,
**dadurch gekennzeichnet, dass** die Außenperipherie der Innen- und Außenlaschen (3, 4) an der Führungsseite (51) der Kette einen geraden Verlauf aufweist.

14. Rollenkette für Fahrräder nach Anspruch 13,
**dadurch gekennzeichnet, dass** die Führungsseite (51) der Kette an einer Außenseite eines Kettenringes angeordnet ist.

## Claims

1. Roller-type chain for bicycles having outer link plates (3) and inner link plates (4), in each case having
- an inner surface (8) of the link plates (3, 4) and an outer surface (9) of the link plates (3, 4), which also constitutes the outer surface of the assembled chain;
- two end regions (5) each with a round outer contour (19) and with a cylindrical hole (7) which is arranged substantially concentrically with respect to the round outer contour (19) and which has in each case a geometrical hole axis (14), and
- having a longitudinal plane (20) through the hole axis (14) of the holes (7) situated in the two end regions (5),
- having a transverse plane (21) which constitutes the plane of symmetry with respect to the hole axes (14) of the holes (7) situated in the two end regions (5),
- having a connecting region (6) which connects the two end regions (5), with a first outer contour (17), which is concave, on one side relative to the longitudinal axis (20) and with a second contour (18) on that side relative to the longitudinal axis (20) which is situated opposite the first outer contour (17),
- wherein a first marginal spacing (28) between the first outer contour (17) of the connecting region (6) and the longitudinal plane (20) is equal in size to the ring spacing (27), measured in a direction parallel to the transverse axis (21), between the margin of the hole (7) and the round outer contour (19) of the end region (5), wherein a second marginal spacing (30) between the second outer contour (18) of the connecting region (6) and the longitudinal axis (20) is larger than the first marginal spacing (28) at least by half the hole radius (29) of the hole (7), wherein the second outer contour (18) adjoins the round outer contours (19) of the two end regions (5) and has a straight profile, wherein the second marginal spacing (30) is equal in size to an end-section radius (32) of the end regions (5),
**characterized in that**
the chain ring formed by way of connection of the two ends of a chain piece to one another has a ring inner side and a ring outer side, and the in each case straight second outer contour (18) of the connecting region (6) of the outer and inner link plates (3, 4) faces towards the ring outer side.

2. Roller-type chain for bicycles according to Claim 1 having chain pins (12) and chain rollers (11), wherein the chain pins (12) are received rotatably in the holes (7) of the inner link plates (4) and rotationally fixedly in the holes of the outer link plates (3);
wherein the inner link plates (4), on their inner surface, have collars (13) in the form of cylindrical rings, the interior space of which in each case is concentric with respect to in each case one of the holes (7) and has the same diameter as the holes (7), and the chain rollers (11) are mounted rotatably on in each case one pair of oppositely situated collars (13).

3. Roller-type chain for bicycles according to Claim 1 or 2,
**characterized in that** the pin ends (31) do not protrude in relation to the outer surfaces (9) of the outer link plates (3).

4. Roller-type chain for bicycles according to one of Claims 1 to 3,
**characterized in that** the spacing, measured in a direction parallel to the transverse axis (21), of the round outer contour (19) of the end region (5) of the inner link plate (4) is larger than the radius of the chain roller (11), whereby a transverse protrusion (26) of the inner link plate (4) in relation to the chain roller (11) is formed.

5. Roller-type chain for bicycles according to one of Claims 1 to 3,
**characterized in that** the spacing, measured in a direction parallel to the longitudinal axis (20), of the round outer contour (19) of the end region (5) of the inner link plate (4) is larger than the radius of the chain roller (11), whereby a longitudinal protrusion (25) of the inner link plate (4) in relation to the chain roller (11) is formed.

6. Roller-type chain for bicycles according to Claim 4 or 5,
**characterized in that** a bevel (34) is provided on the transverse protrusion (26) and/or on the longitudinal protrusion (25).

7. Roller-type chain for bicycles according to Claim 6,
**characterized in that** the bevel angle (35) between the inner surface (8) of the inner link plate (4) and the bevel (34) is of varying size.

8. Roller-type chain for bicycles according to one of Claims 4 to 7,
**characterized in that** the bevel angle (35) is 38 degrees at the longitudinal protrusion (25) and is 51 degrees at the transverse protrusion (26).

9. Roller-type chain for bicycles according to Claim 2 or 3,
**characterized in that** the centre of the circle of the round outer contour (19) of the end region (5) is offset in the direction of the longitudinal axis (20) in relation to the hole axis (14).

10. Roller-type chain for bicycles according to one of Claims 1 to 3,
**characterized in that** the material thickness of the inner link plate (4) amounts to more than 0.7 and less than 0.8 millimetres.

11. Roller-type chain for bicycles according to one of Claims 1 to 3,
**characterized in that** the inner link plate (4) has a recess (33) on the inner surface (8) in the connecting region (6), whereby the spacing of the inner surface (8) to the outer surface (9) is reduced to in particular 0.6 millimetres in the connecting region (6).

12. Roller-type chain for bicycles according to one of Claims 1 to 3,
**characterized in that** the chain ring formed by way of connection of the two ends of a chain piece to one another has a ring inner side and a ring outer side, wherein, on the inner link plates (4), on the side facing towards the ring outer side, there are provided form elements which are suitable for guiding and aligning that tooth of a sprocket which has entered the link-plate intermediate space (24) from the ring inner side.

13. Roller-type chain for bicycles having outer link plates (3) and inner link plates (4) that are asymmetrical with respect to the longitudinal axis (20) thereof, chain pins (12) and chain rollers (11), wherein the chain pins (12) are received rotatably in the holes (7) of the inner link plates (4) and rotationally fixedly in the holes (7) of the outer link plates (3),
wherein the inner and outer link plates (3, 4) have an engagement side (50) on the outer periphery on one of the two sides relative to the longitudinal axis (20) through the centres of the holes (7), and have a guide side (51) on the other of the two sides relative to the longitudinal axis (20);
wherein the engagement sides (50) of the inner and outer link plates (3, 4) have catching bevels (16) and deflecting bevels (15) for interaction with the teeth on the rear and front sprockets, and
wherein the guide sides (51) of the inner and outer link plates (3, 4) have guide bevels (53), such that the roller-type chain is, upon contact with the chain-guiding roller (52) of a rear gearshift mechanism, guided by the chain-guiding roller (52),
**characterized in that** the outer periphery of the inner and outer link plates (3, 4) has a straight profile on the guide side (51) of the chain.

14. Roller-type chain for bicycles according to Claim 13,
**characterized in that** the guide side (51) of the chain is arranged at an outer side of a chain ring.

## Revendications

1. Chaîne à rouleaux pour bicyclettes comportant des plaques extérieures (3) et des plaques intérieures (4), présentant respectivement
- une surface intérieure (8) de la plaque (3, 4) et une surface extérieure (9) de la plaque (3, 4), qui constitue également la surface extérieure de la chaîne montée ;
- deux régions d'extrémité (5) présentant respectivement un contour extérieur circulaire (19) et une perforation cylindrique (7) disposée sensiblement concentriquement au contour extérieur circulaire (19) et dotée respectivement d'un axe de perforation géométrique (14), et
- présentant un plan longitudinal (20) passant par l'axe de perforation (14) des perforations (7) se trouvant dans les deux régions d'extrémité (5),
- présentant un plan transversal (21), qui constitue le plan de symétrie par rapport aux axes de perforation (14) des perforations (7) se trouvant dans les deux régions d'extrémité (5),
- une région de liaison (6), qui relie les deux régions d'extrémité (5), comportant un premier contour extérieur (17), qui est concave, sur l'un des côtés par rapport à l'axe longitudinal (20) et comportant un deuxième contour extérieur (18) sur le côté opposé au premier contour extérieur (17) par rapport à l'axe longitudinal (20),
- dans laquelle une première distance au bord (28) entre le premier contour extérieur (17) de la région de liaison (6) et le plan longitudinal (20) est égale à la distance au bord (27), mesurée dans une direction parallèle à l'axe transversal (21), entre le bord de la perforation (7) et le contour extérieur circulaire (19) de la région d'extrémité (5),
dans laquelle une deuxième distance au bord (30) entre le deuxième contour extérieur (18) de la région de liaison (6) et l'axe longitudinal (20) d'au moins la moitié du rayon (29) de la perforation (7) est supérieure à la première distance au bord (28), dans laquelle le deuxième contour extérieur (18) se raccorde aux contours extérieurs circulaires (19) des deux régions d'extrémité (5) et présente une allure rectiligne, dans laquelle la deuxième distance au bord (30) est égale à un rayon de partie d'extrémité (32) des régions d'extrémité (5),
**caractérisée en ce que**
l'anneau de chaîne produit par une liaison des deux extrémités d'un morceau de chaîne l'une à l'autre présente un côté intérieur d'anneau et un côté extérieur d'anneau et le deuxième contour extérieur respectivement rectiligne (18) de la région de liaison (6) des plaques extérieures et intérieures (3, 4) est tourné vers le côté extérieur de l'anneau.

2. Chaîne à rouleaux pour bicyclettes selon la revendication 1 comportant des tourillons de chaîne (12) et des rouleaux de chaîne (11), dans laquelle les tourillons de chaîne (12) sont reçus rotatifs dans les perforations (7) des plaques intérieures (4) et de manière bloquée en rotation dans les perforations des plaques extérieures (3) ;
dans laquelle les plaques intérieures (4) présentent, sur leur surface intérieure, des rebords (13) sous la forme d'anneaux cylindriques, dont l'espace intérieur est respectivement concentrique à respectivement l'une des perforations (7) et présentent le même diamètre que les perforations (7) et les rouleaux de chaîne (11) sont montés rotatifs sur une paire respective de rebords opposés (13).

3. Chaîne à rouleaux pour bicyclettes selon la revendication 1 ou 2,
**caractérisée en ce que** les extrémités de tourillon (31) ne font pas saillie par rapport aux surfaces extérieures (9) des plaques extérieures (3).

4. Chaîne à rouleaux pour bicyclettes selon l'une des revendications 1 à 3,
**caractérisée en ce que** la distance, mesurée dans une direction parallèle à l'axe transversal (21), du contour extérieur circulaire (19) de la région d'extrémité (5) de la plaque intérieure (4) est supérieure au rayon du rouleau de chaîne (11), de sorte qu'une saillie transversale (26) de la plaque intérieure (4) par rapport au rouleau de chaîne (11) est formée.

5. Chaîne à rouleaux pour bicyclettes selon l'une des revendications 1 à 3,
**caractérisée en ce que** la distance, mesurée dans une direction parallèle à l'axe longitudinal (20), du contour extérieur circulaire (19) de la région d'extrémité (5) de la plaque intérieure (4) est supérieure au rayon du rouleau de chaîne (11), de sorte qu'une saillie longitudinale (25) de la plaque intérieure (4) par rapport au rouleau de chaîne (11) est formée.

6. Chaîne à rouleaux pour bicyclettes selon la revendication 4 ou 5,
**caractérisée en ce qu'**un biseau (34) est présent sur la saillie transversale (26) et/ou sur la saillie longitudinale (25).

7. Chaîne à rouleaux pour bicyclettes selon la revendication 6,
**caractérisée en ce que** l'angle de biseau (35) entre la surface intérieure (8) de la plaque intérieure (4) et le biseau (34) est de taille différente.

8. Chaîne à rouleaux pour bicyclettes selon l'une des revendications 4 à 7,
**caractérisée en ce que** l'angle de biseau (35) est de 38 degrés sur la saillie longitudinale (25) et de 51 degrés sur la saillie transversale (26).

9. Chaîne à rouleaux pour bicyclettes selon la revendication 2 ou 3,
**caractérisée en ce que** le centre du cercle du contour extérieur circulaire (19) de la région d'extrémité (5) est décalé en direction de l'axe longitudinal (20) par rapport à l'axe de perforation (14).

10. Chaîne à rouleaux pour bicyclettes selon l'une des revendications 1 à 3,
**caractérisée en ce que** l'épaisseur de matériau de la plaque intérieure (4) vaut plus de 0,7 et moins de 0,8 millimètres.

11. Chaîne à rouleaux pour bicyclettes selon l'une des revendications 1 à 3,
**caractérisée en ce que** la plaque intérieure (4) présente, dans la région de liaison (6), au niveau de la surface intérieure (8), un évidement (33), de sorte que la distance de la surface intérieure (8) à la surface extérieure (9) soit réduite en particulier à 0,6 millimètres dans la région de liaison (6).

12. Chaîne à rouleaux pour bicyclettes selon l'une des revendications 1 à 3,
**caractérisée en ce que** l'anneau de chaîne produit par une liaison des deux extrémités d'un morceau de chaîne l'une à l'autre présente un côté intérieur d'anneau et un côté extérieur d'anneau, des éléments façonnés étant présents sur les plaques intérieures (4) sur le côté tourné vers le côté extérieur d'anneau, lesquels éléments façonnés sont aptes à guider et orienter la dent, qui a pénétré à partir du côté intérieur d'anneau dans l'espace intermédiaire entre plaques (24), d'un pignon.

13. Chaîne à rouleaux pour bicyclettes comportant des plaques extérieures (3) et des plaques intérieures (4) asymétriques par rapport à leur axe longitudinal (20), des tourillons de chaîne (12) et des rouleaux de chaîne (11), dans laquelle les tourillons de chaîne (12) sont reçus rotatifs dans les perforations (7) des plaques intérieures (4) et de manière bloquée en rotation dans les perforations (7) des plaques extérieures (3),
dans laquelle les plaques intérieures et extérieures (3, 4) ont, sur la périphérie extérieure, sur l'un des deux côtés par rapport à l'axe longitudinal (20) passant par les centres des perforations (7), un côté d'engrènement (50) et, sur l'autre des deux côtés par rapport à l'axe longitudinal (20), un côté de guidage (51) ;
dans laquelle les côtés d'engrènement (50) des plaques intérieures et extérieures (3, 4) présentent des biseaux de saisie (16) et des biseaux de déviation (15) pour la coopération avec les dents sur les pignons arrière et avant, et
dans laquelle les côtés de guidage (51) des plaques intérieures et extérieures (3, 4) présentent des biseaux de guidage (53), de sorte que la chaîne à rouleaux, lors du contact avec le rouleau de guidage de chaîne (52) d'un dérailleur arrière, soit guidée par le rouleau de guidage de chaîne (52),
**caractérisée en ce que** la périphérie extérieure des plaques intérieures et extérieures (3, 4) sur le côté de guidage (51) de la chaîne présente une allure rectiligne.

14. Chaîne à rouleaux pour bicyclettes selon la revendication 13,
**caractérisée en ce que** le côté de guidage (51) de la chaîne est disposé au niveau d'un côté extérieur d'un anneau de chaîne.
